# EUROPEAN PATENT SPECIFICATION

(11) **EP 4 481 468 B1**
(45) Date of publication and mention of the grant of the patent: **28.10.2026**
(21) Application number: 23778022.6
(22) Date of filing: 23.03.2023
(51) Int. Cl.: G02B 27/01, G02B 27/28

(54) **HEAD-UP DISPLAY APPARATUS, HEAD-UP DISPLAY METHOD, AND VEHICLE**
HEAD-UP-ANZEIGEVORRICHTUNG, HEAD-UP-ANZEIGEVERFAHREN UND FAHRZEUG
APPAREIL D'AFFICHAGE TÊTE HAUTE, PROCÉDÉ D'AFFICHAGE TÊTE HAUTE ET VÉHICULE

(30) Priority: 30.03.2022 CN 202210332331
(43) Date of publication of application: 25.12.2024
(73) Proprietor: Huawei Technologies Co., Ltd., Shenzhen, Guangdong 518129 (CN)
(72) Inventor: WANG, Xiao, Shenzhen, Guangdong 518129 (CN); LIAO, Wenzhe, Shenzhen, Guangdong 518129 (CN); LI, Gen, Shenzhen, Guangdong 518129 (CN)
(74) Representative: MERH-IP Matias Erny Reichl Hoffmann Patentanwälte PartG mbB
(86) International application number: PCT/CN2023/083499
(87) International publication number: WO 2023/185653

(56) References cited:
- EP-A1- 3 557 307
- EP-A1- 4 141 516
- EP-A1- 4 227 726
- WO-A1-2021/215400
- WO-A1-2022/052112
- CN-A- 106 483 664
- CN-A- 112 639 580
- CN-A- 112 639 581
- CN-A- 112 789 545
- CN-A- 113 296 266
- CN-A- 113 296 266
- CN-A- 113 671 701
- CN-A- 114 326 117
- CN-A- 114 415 370
- CN-U- 206 421 102
- CN-U- 215 494 350
- CN-U- 218 213 623
- JP-A- 2018 095 157
- JP-A- 2019 219 555
- US-A1- 2020 018 977
- US-A1- 2020 039 438
- US-B1- 11 169 377

## Description

### TECHNICAL FIELD

This application relates to the field of intelligent vehicle technologies, and in particular, to a head-up display apparatus, a head-up display method, and a vehicle.

### BACKGROUND

A head-up display (head-up display, HUD) technology, also referred to as a heads-up display technology, has been gradually widely applied in the automotive field in recent years. A HUD apparatus projects important driving information to a windshield, which is then reflected by the windshield to form a virtual image directly in a line-of-sight of a driver, allowing the driver to view the information without looking down at a dashboard or control screen. Compared with the dashboard, central control screen, or other display methods that require the driver to look down, HUD avoids the risk of distracted driving caused by lowering the driver's gaze, making it a safer in-vehicle display method.

Currently, to achieve a larger display area, for example, displaying meter information such as vehicle speed, fuel level, and water temperature, the HUD apparatus shows information close up (about 2-3 meters away) and fuses navigation information with reality, displaying it at a distance of 7.5-10 meters. The HUD apparatus relies on a plurality of picture generation units (picture generation units, PGUs) to achieve the above purpose, despite requiring a high cost and a large volume.

Document WO 2021/215400 A1 generally discloses a vehicular display device that can suitably display each of a plurality of images, and that achieves a small-sized image display unit. This vehicular display device comprises an image display unit including a plurality of pixels for displaying an image on an image display surface, and projects image light of a displayed image onto a windshield of a vehicle by an optical system so as to enable a virtual image of the image to be visually recognized using light reflected on the windshield. The image display unit includes a prism sheet arranged on the image display surface. The prism sheet includes a plurality of microprisms that are disposed to face the plurality of pixels constituting one image, and individually deflect image light emitted from the pixels.

### SUMMARY

Embodiments of this application provide a head-up display apparatus, a head-up display method, and a vehicle, which are implemented by using only one PGU, so that costs and a volume of the HUD apparatus can be reduced. In particular, this application provides a head-up display apparatus, a vehicle and a head-up display method, having the features of respective independent claims. The dependent claims relate to preferred embodiments.

According to a first aspect, an embodiment of this application provides a head-up display apparatus, including a picture generation unit PGU and an optical assembly. The PGU is configured to: generate a light beam to be projected into a picture, where the picture to be projected into includes a first area picture and a second area picture; emit a light beam for the first area picture, so that the light beam for the first area picture passes through a first projection area of the optical assembly; and emit a light beam for the second area picture, so that the light beam for the second area picture passes through a second projection area of the optical assembly. A focal power of a part of the optical assembly through which an optical path of the light beam for the first area picture passes is different from a focal power of a part of the optical assembly through which an optical path of the light beam for the second area picture passes.

That a focal power of a part of the optical assembly through which an optical path of the light beam for the first area picture passes is different from a focal power of a part of the optical assembly through which an optical path of the light beam for the second area picture passes may be understood that the optical assembly may be divided into two parts, where a first part corresponds to the first projection area, and a second part corresponds to the second projection area. The focal power of the first part is different from a focal power of the second part.

Through the foregoing HUD apparatus, the first area picture and the second area picture are projected to different projection areas of the optical assembly by using one PGU. Because parts of different projection areas of the optical assembly have different focal powers, different area pictures output from the HUD apparatus may be focused on different depths, that is, may be displayed as two virtual images with different virtual image distances. The HUD apparatus needs to use only a single PGU, and there is no need to increase a length of an optical path of an area picture. Therefore, no more reflection assemblies are required. This helps simplify an assembly volume of the HUD apparatus, and complexity is low.

According to the claimed invention, the apparatus further includes a ghost elimination assembly, and the ghost elimination assembly is configured to adjust the light beam for the first area picture and/or the light beam for the second area picture that are/is input to the ghost elimination assembly, so that the light beam that is for the first area picture and that is emitted through the first projection area of the optical assembly does not overlap the light beam that is for the second area picture and that is emitted through the second projection area of the optical assembly.

In the foregoing design, light beams are adjusted by using the ghost elimination assembly, so that light beams of the two area pictures do not overlap when reaching a human eye, and no interference occurs after a virtual image corresponding to the first area picture and a virtual image corresponding to the second area picture are focused. This avoids a case in which a part of a picture on a long-focus surface exists in a picture on a short-focus surface seen by the human eye, and a part of the picture of the short-focus surface exists in the picture of the long-focus surface.

The ghost elimination assembly includes at least one first half-wave plate, a first film layer, and a second film layer, the first film layer is attached to the first projection area of the optical assembly, and the second film layer is attached to the second projection area of the optical assembly.

Case 1: The at least one first half-wave plate is located between the PGU and an optical path of the first projection area, and a polarization direction of the light beam for the first area picture adjusted by the at least one first half-wave plate is perpendicular to a polarization direction of the light beam for the second area picture projected by the PGU. A polarization direction of the first film layer is perpendicular to a polarization direction of the light beam for the first area picture projected by the PGU, and the polarization direction of the first film layer is perpendicular to a polarization direction of the second film layer. The polarization direction of the first film layer is the same as the polarization direction of the light beam for the first area picture projected by the at least one half-wave plate, and the polarization direction of the second film layer is perpendicular to the polarization direction of the light beam for the first area picture projected by the at least one half-wave plate. In this way, the light beam for the first area picture is absorbed by the second film layer when reaching the second film layer. On the contrary, the light beam for the second area picture is absorbed by the first film layer when reaching the first film layer. That is, it may be understood that the light beam for the first area picture projected through the first projection area of the optical assembly and the light beam for the second area picture projected through the second projection area do not interfere with each other.

Case 2: The at least one first half-wave plate is located between the PGU and an optical path of the second projection area, and a polarization direction of the light beam for the second area picture adjusted by the at least one half-wave plate is perpendicular to a polarization direction of the light beam for the first area picture projected by the PGU. A polarization direction of the first film layer is the same as the polarization direction of the light beam for the first area picture projected by the PGU, and the polarization direction of the first film layer is perpendicular to a polarization direction of the second film layer. The polarization direction of the second film layer is the same as the polarization direction of the light beam for the second area picture projected by the at least one half-wave plate, and the polarization direction of the first film layer is perpendicular to the polarization direction of the light beam for the second area picture projected by the at least one half-wave plate. In this way, the light beam for the first area picture is absorbed by the second film layer when reaching the second film layer. On the contrary, the light beam for the second area picture is absorbed by the first film layer when reaching the first film layer. That is, it may be understood that the light beam for the first area picture projected through the first projection area of the optical assembly and the light beam for the second area picture projected through the second projection area do not interfere with each other.

In a possible design, the PGU includes a projector optical engine and a diffuser, the projector optical engine is configured to generate the light beam to be projected into the picture, and the diffuser includes a third projection area and a fourth projection area. The diffuser is configured to: evenly project, to the first projection area of the optical assembly, the light beam that is for the first area picture and that is received in the third projection area; and evenly project, to the second projection area of the optical assembly, the light beam that is for the second area picture and that is received in the fourth projection area.

In a possible design, the ghost elimination assembly includes at least one second half-wave plate, a third film layer, and a fourth film layer, the first film layer is attached to the first projection area of the optical assembly, and the second film layer is attached to the second projection area of the optical assembly.

Case 1: The at least one second half-wave plate is located between the projector optical engine and an optical path of the third projection area, and a polarization direction of the light beam for the first area picture adjusted by the at least one second half-wave plate is perpendicular to a polarization direction of the light beam for the second area picture projected by the projector optical engine. A polarization direction of the first film layer is perpendicular to a polarization direction of the light beam for the first area picture projected by the projector optical engine, and the polarization direction of the first film layer is perpendicular to a polarization direction of the second film layer. The polarization direction of the second film layer is the same as the polarization direction of the light beam for the second area picture projected by the at least one half-wave plate, and the polarization direction of the first film layer is perpendicular to the polarization direction of the light beam for the second area picture projected by the at least one half-wave plate. In this way, the light beam for the first area picture is absorbed by the second film layer when reaching the second film layer. On the contrary, the light beam for the second area picture is absorbed by the first film layer when reaching the first film layer. That is, it may be understood that the light beam for the first area picture projected through the first projection area of the optical assembly and the light beam for the second area picture projected through the second projection area do not interfere with each other.

Case 2: The at least one second half-wave plate is located between the projector optical engine and an optical path of the first projection area, and a polarization direction of the light beam for the second area picture adjusted by the at least one second half-wave plate is perpendicular to a polarization direction of the light beam for the first area picture projected by the projector optical engine. A polarization direction of the first film layer is the same as a polarization direction of the light beam for the first area picture projected by the projector optical engine, and the polarization direction of the first film layer is perpendicular to a polarization direction of the second film layer. The polarization direction of the second film layer is the same as the polarization direction of the light beam for the second area picture projected by the at least one half-wave plate, and the polarization direction of the first film layer is perpendicular to the polarization direction of the light beam for the second area picture projected by the at least one half-wave plate. In this way, the light beam for the first area picture is absorbed by the second film layer when reaching the second film layer. On the contrary, the light beam for the second area picture is absorbed by the first film layer when reaching the first film layer. That is, it may be understood that the light beam for the first area picture projected through the first projection area of the optical assembly and the light beam for the second area picture projected through the second projection area do not interfere with each other.

According to the claimed invention the optical assembly includes a free-form primary mirror, the free-form primary mirror includes the first projection area and the second projection area, and in the free-form primary mirror, a focal power in the first projection area is different from a focal power in the second projection area.

In the foregoing design, free-form primary mirrors having different focal powers are configured in different areas, so that effect of a short-focus surface and a long-focus surface does not need to be achieved by adjusting lengths of optical paths of different area pictures. This reduces an assembly volume of the HUD apparatus.

In a possible design, the head-up display apparatus further includes a first reflector. The first reflector is configured to: perform optical path folding on the light beam for the first area picture projected by the PGU, so that the light beam for the first area picture is reflected to the first projection area of the free-form primary mirror; and perform optical path folding on the light beam for the second area picture projected by the PGU, so that the light beam for the second area picture is reflected to the second projection area of the free-form primary mirror.

In the foregoing design, optical path folding is performed by using the reflector, so that assembly between components is more compact. This further reduces the assembly volume of the HUD apparatus.

In a possible design, the head-up display apparatus further includes a windshield, the optical assembly includes a holographic optical element HOE thin film, the HOE thin film is attached to the windshield or the HOE thin film is located at an interlayer of the windshield, the HOE thin film includes the first projection area and the second projection area, and in the HOE thin film, a focal power in the first projection area is different from a focal power in the second projection area. In the foregoing design, HOE thin films having different focal powers are designed on the windshield, so that the effect of the short-focus surface and the long-focus surface does not need to be achieved by adjusting the lengths of the optical paths of different area pictures. This reduces the assembly volume of the HUD apparatus.

In a possible design, the optical assembly includes a first lens group and a second lens group, a focal power of the first lens group is different from a focal power of the second lens group, the first lens group is located in the third projection area of the optical assembly, and the second lens group is located in the fourth projection area of the optical assembly. In the foregoing design, the effect of the short-focus surface and the long-focus surface is achieved by using a lens, and costs are low.

In a possible design, the apparatus further includes a second reflector and a third reflector. The second reflector is configured to: perform optical path folding on the light beam for the first area picture projected by the PGU, so that the light beam for the first area picture is reflected to the first lens group, reaches the third reflector after being transmitted by the first lens group, and is reflected by the third reflector to the windshield; and perform optical path folding on the light beam for the second area picture projected by the PGU, so that the light beam for the second area picture is reflected to the second lens group, reaches the third reflector after being transmitted by the second transmission group, and is reflected by the third reflector to the windshield.

In the foregoing design, optical path folding is performed by using the reflector, so that assembly between components is more compact. This further reduces the assembly volume of the HUD apparatus.

According to a second aspect, an embodiment of this application provides a vehicle, including the head-up display apparatus according to any design of the first aspect or the second aspect.

According to a third aspect, an embodiment of this application provides a head-up display method. The head-up display method is implemented in a head-up display apparatus, and the head-up display apparatus includes a picture generation unit PGU and an optical assembly. The head-up display method includes: emitting, by using the PGU, a light beam to be projected into a picture, where the picture to be projected into includes a first area picture and a second area picture, so that a light beam for the first area picture passes through a first projection area of the optical assembly, and a light beam for the second area picture passes through a second projection area of the optical assembly. A focal power of a part of the optical assembly through which an optical path of the light beam for the first area picture passes is different from a focal power of a part of the optical assembly through which an optical path of the light beam for the second area picture passes, so that a virtual image corresponding to the first area picture and a virtual image corresponding to the second area picture are focused on different positions outside a windshield.

According to the claimed invention, the head-up display apparatus further includes a ghost elimination assembly.

The method further includes: adjusting, by using the ghost elimination assembly, the light beam for the first area picture and/or the light beam for the second area picture that are/is input to the ghost elimination assembly, so that the light beam that is for the first area picture and that is emitted through the first projection area of the optical assembly does not overlap the light beam that is for the second area picture and that is emitted through the second projection area of the optical assembly.

The ghost elimination assembly includes at least one first half-wave plate, a first film layer, and a second film layer, the first film layer is attached to the first projection area of the optical assembly, and the second film layer is attached to the second projection area of the optical assembly.

The adjusting, by using the ghost elimination assembly, the light beam for the first area picture and/or the light beam for the second area picture that are/is input to the ghost elimination assembly includes:
the at least one first half-wave plate is located between the PGU and an optical path of the first projection area, adjusting, by using the at least one half-wave plate, a polarization direction of the light beam for the first area picture projected by the PGU to be perpendicular to a polarization direction of the light beam for the second area picture projected by the PGU, where a polarization direction of the first film layer is perpendicular to the polarization direction of the light beam for the first area picture projected by the PGU, and the polarization direction of the first film layer is perpendicular to a polarization direction of the second film layer; or
the at least one first half-wave plate is located between the PGU and an optical path of the first projection area, adjusting, by using the at least one half-wave plate, a polarization direction of the light beam for the second area picture to be perpendicular to a polarization direction of the light beam for the first area picture projected by the PGU, where a polarization direction of the first film layer is the same as the polarization direction of the light beam for the first area picture projected by the PGU, and the polarization direction of the first film layer is perpendicular to a polarization direction of the second film layer.
According to the claimed invention, the optical assembly includes a free-form primary mirror, the free-form primary mirror includes the first projection area and the second projection area, and in the free-form primary mirror, a focal power in the first projection area is different from a focal power in the second projection area.

For technical effect that can be achieved in any design of the third aspect, refer to descriptions of beneficial effect in the first aspect. Details are not described herein again.

### BRIEF DESCRIPTION OF DRAWINGS

To describe technical solutions in embodiments of this application more clearly, the following briefly describes the accompanying drawings for describing embodiments.
FIG. 1 is a diagram of a possible application scenario according to this application;
FIG. 2 is a diagram of a possible architecture of a HUD system;
FIG. 3 is a diagram of a possible structure of a HUD apparatus according to this application;
FIG. 4 is a diagram of another possible structure of a HUD apparatus according to this application;
FIG. 5A is a diagram of a possible structure of a projector optical engine according to this application;
FIG. 5B is a diagram of another possible structure of a projector optical engine according to this application;
FIG. 5C is a diagram of still another possible structure of a projector optical engine according to this application;
FIG. 6 is a diagram of still another possible structure of a projector optical engine according to this application;
FIG. 7A is a diagram of still another possible structure of a projector optical engine according to this application;
FIG. 7B is a diagram of still another possible structure of a projector optical engine according to this application;
FIG. 8 is a diagram of still another possible structure of a HUD apparatus according to this application;
FIG. 9 is a diagram of still another possible structure of a HUD apparatus according to this application;
FIG. 10 is a diagram of still another possible structure of a HUD apparatus according to this application;
FIG. 11 is a diagram of still another possible structure of a HUD apparatus according to this application;
FIG. 12 is a diagram of still another possible structure of a HUD apparatus according to this application;
FIG. 13 is a diagram of still another possible structure of a HUD apparatus according to this application;
FIG. 14 is a diagram of a crosstalk scenario according to this application;
FIG. 15A is a diagram of still another possible structure of a HUD apparatus according to this application;
FIG. 15B is a diagram of still another possible structure of a HUD apparatus according to this application;
FIG. 16A is a diagram of still another possible structure of a HUD apparatus not according to the claimed invention;
FIG. 16B is a diagram of still another possible structure of a HUD apparatus not according to the claimed invention;
FIG. 16C is a diagram of still another possible structure of a HUD apparatus not according to the claimed invention;
FIG. 16D is a diagram of still another possible structure of a HUD apparatus not according to the claimed invention;
FIG. 16E is a diagram of still another possible structure of a HUD apparatus not according to the claimed invention;
FIG. 16F is a diagram of still another possible structure of a HUD apparatus not according to the claimed invention;
FIG. 17 is a diagram of still another possible structure of a HUD apparatus not according to the claimed invention;
FIG. 18A is a diagram of still another possible structure of a HUD apparatus according to this application;
FIG. 18B is a diagram of still another possible structure of a HUD apparatus according to this application;
FIG. 18C is a diagram of still another possible structure of a HUD apparatus according to this application;
FIG. 18D is a diagram of still another possible structure of a HUD apparatus according to this application;
FIG. 18E is a diagram of still another possible structure of a HUD apparatus according to this application;
FIG. 18F is a diagram of still another possible structure of a HUD apparatus according to this application;
FIG. 19 is a diagram of still another possible structure of a HUD apparatus not according to the claimed invention;
FIG. 20 is a diagram of a possible structure of a HUD system not according to the claimed invention;
FIG. 21 is a diagram of another possible structure of a HUD system not according to the claimed invention;
FIG. 22 is a diagram of still another possible structure of a HUD system not according to the claimed invention;
FIG. 23 is a diagram of still another possible structure of a HUD system not according to the claimed invention;
FIG. 24 is a diagram of still another possible structure of a HUD system not according to the claimed invention;
FIG. 25 is a diagram of still another possible structure of a HUD system not according to the claimed invention; and
FIG. 26 is a schematic flowchart of still another possible HUD method according to this application.

### DESCRIPTION OF EMBODIMENTS

The following describes in detail embodiments of this application with reference to accompanying drawings.

A head-up display (head-up display, HUD) apparatus provided in embodiments of this application may be used in a vehicle, or may be used in another transportation means like an airplane, a spacecraft, or a ship. For ease of description, in this application, a vehicle-mounted HUD is used as an example for description. However, it should be understood that this does not constitute a limitation on this application.

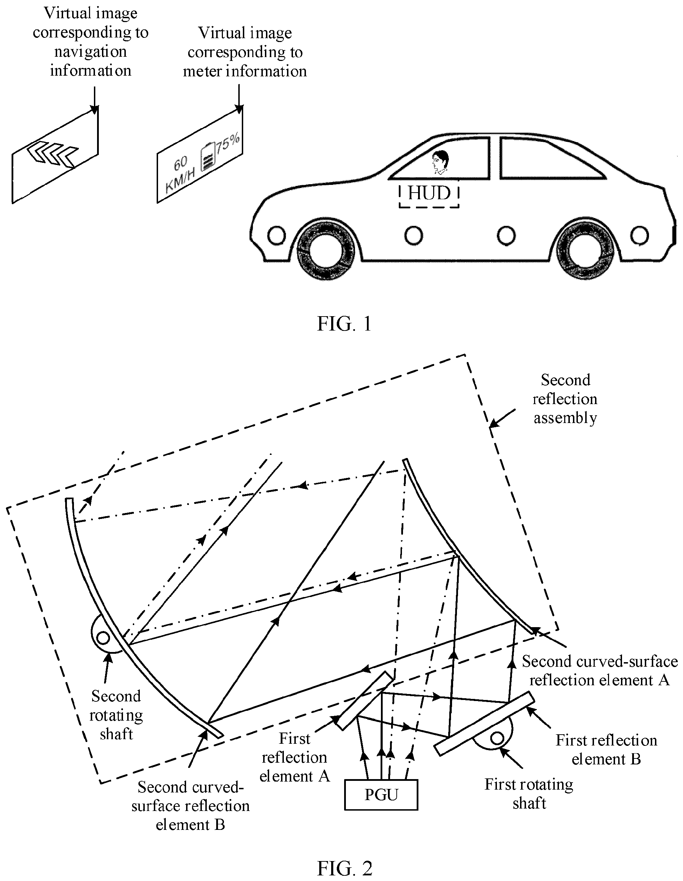

FIG. 1 is a diagram of a scenario in which a vehicle-mounted HUD apparatus is used in a vehicle. A HUD system is configured to project meter information (a vehicle speed, a temperature, a fuel volume, and the like) and navigation information on the vehicle to a field of view of a driver through a windshield of the vehicle. A virtual image corresponding to the navigation information may be superimposed on a real environment outside the vehicle, so that the driver can obtain augmented reality visual effect. For example, the HUD system may be used for AR navigation, adaptive cruise, and lane departure warning. To avoid interference with a road condition, a virtual image distance of a virtual image corresponding to the meter information is usually approximately 2 meters to 3 meters. For better combination of the virtual image corresponding to the navigation information with a real road surface, a virtual image distance of the virtual image corresponding to the navigation information is usually approximately 7 meters to 15 meters. The virtual image distance may be understood as a distance from a human eye to a center of the virtual image.

To reduce a volume of the HUD apparatus, virtual image display in a long virtual image distance and a short virtual image distance can be implemented through different object distances by using one PGU. The object distance is a distance between a focal plane in object space and an optical element. FIG. 2 is a diagram of a possible structure of a HUD apparatus. A PGU is divided into a picture A and a picture B in two different areas. After being transmitted by the PGU, the picture A is separately reflected by a first reflection element A, a second curved-surface reflection element A, and a second curved-surface reflection element B, and then reaches a windshield. Refer to a solid line in FIG. 2. After being transmitted by the PGU, the picture B is reflected by the second curved-surface reflection element A and the second curved-surface reflection element B, and then reaches the windshield. Refer to a dashed line in FIG. 2. Although the foregoing solution can reduce a quantity of used PGUs and reduce costs, more optical elements need to be introduced to fold an optical path for different object distances. As a result, there are a large quantity of optical elements, and installation and adjustment difficulty increases.

Based on this, an embodiment of this application provides a HUD apparatus. Only one PGU is used, and no more optical elements need to be introduced to adjust an object distance, so that an HUD system displays at least two virtual images with different virtual image distances. This facilitates miniaturization of the HUD apparatus.

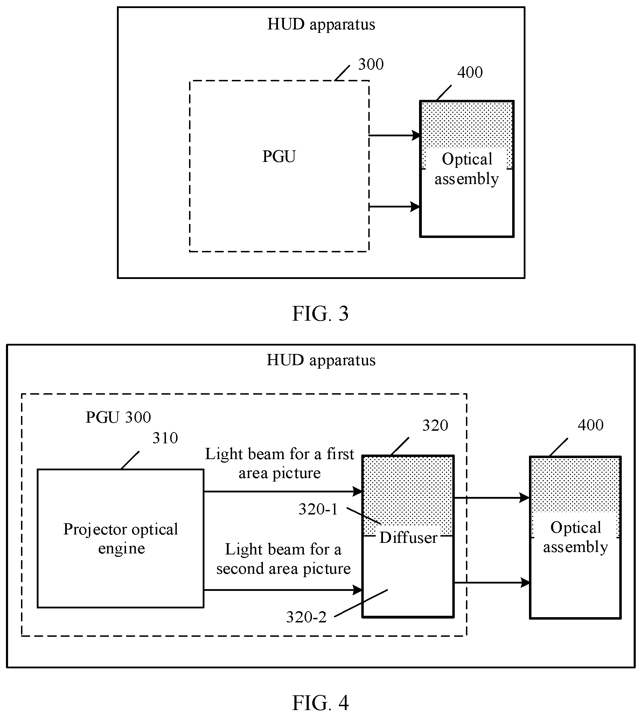

FIG. 3 is a diagram of a structure of a HUD apparatus according to an embodiment of this application. The HUD apparatus includes a picture generation unit PGU 300 and an optical assembly 400. The PGU 300 is configured to generate a light beam to be projected into a picture. The picture to be projected into includes a first area picture and a second area picture. The PGU 300 sends the light beam to be projected into the picture, so that a light beam for the first area picture passes through a first projection area of the optical assembly, and a light beam for the second area picture passes through a second projection area of the optical assembly. It may also be understood that the PGU 300 emits the light beam for the first area picture, so that the light beam for the first area picture passes through the first projection area of the optical assembly. The PGU 300 emits the light beam for the second area picture, so that the light beam for the second area picture passes through the second projection area of the optical assembly. A focal power of a part of the optical assembly 400 through which an optical path of the light beam for the first area picture passes is different from a focal power of a part of the optical assembly 400 through which an optical path of the light beam for the second area picture passes.

Herein, that a focal power of a part of the optical assembly 400 through which an optical path of the light beam for the first area picture passes is different from a focal power of a part of the optical assembly 400 through which an optical path of the light beam for the second area picture passes may be understood that the optical assembly 400 may be divided into two parts, a first part corresponds to the first projection area, a second part corresponds to the second projection area, and a focal power of the first part is different from a focal power of the second part. It may also be understood that a focal power in the first projection area of the optical assembly 400 is different from a focal power in the second projection area.

The focal power is a reciprocal of a focal length and is used to measure a diopter of an optical lens, and a unit is D. When the focal length is 1 m, the focal power is 1 D, namely, 1 m-1. When the focal length is 2 m, the focal power is 0.5 D, and so on. The focal length, also referred to as a focal distance, is a measurement manner for measuring light convergence or divergence in an optical system. The focal length is a distance from a lens center to a focal point of light convergence, and is also referred to as an effective focal length.

Through the foregoing HUD apparatus, the first area picture and the second area picture are projected to different projection areas of the optical assembly by using one PGU. Because parts of different projection areas of the optical assembly have different focal powers, different area pictures output from the HUD apparatus may be focused on different depths, that is, may be displayed as two virtual images with different virtual image distances. The HUD apparatus needs to use only a single PGU, and there is no need to increase a length of an optical path of an area picture. Therefore, no more reflection assemblies are required. This helps simplify an assembly volume of the HUD apparatus, and complexity is low.

Optionally, the first area picture may be the same as the second area picture, that is, the two virtual images with different virtual image distances are the same. In this way, a same virtual image with different virtual image distances can be implemented, so that visual effect of dynamic zooming can be generated. For example, for a dynamic navigation pointer arrow extending forward, when a virtual image of this dynamic arrow enters a long-focus optical path (an optical path that forms a first virtual image may be referred to as the long-focus optical path), it is equivalent to that the arrow goes straight from a second position at a short-focus location to a first position in the long-focus optical path. For a driver, a visual perception may be that the arrow extends from near to far, creating a stereoscopic sense of space in the front and rear on entire display. This can generate visual effect similar to dynamic zooming. The first area picture may alternatively be different from the second area picture. For example, the focal power of the first part of the optical assembly 400 is less than the focal power of the second part. The first area picture carries navigation picture information, and the second area picture carries meter picture information. In other words, meter information is presented at a position that is closer to the driver, and navigation information is presented at a position that is farther from the driver.

The following separately describes functional components and structures shown in FIG. 3, to provide specific example implementation solutions.

### 1. PGU 300

The PGU 300 may be implemented by using an active projection solution, or may be implemented by using a passive projection solution. This is not specifically limited in embodiments of this application.

A passive projector optical engine is used in the passive projection solution. The passive projector optical engine uses a passive picture source, which requires an additional light source to irradiate to a picture modulation device. A passive picture source technology may use a liquid crystal on silicon (liquid crystal on silicon, LCOS) technical solution, a digital light processing (digital light processing, DLP) technical solution, a light-emitting diode (light-emitting diode, LED) technical solution, or a laser beam scanning (laser beam scanning, LBS) technical solution. The light source may be a common side-emitted semiconductor laser light source, a light-emitting diode (light-emitting diode, LED) light source, a vertical cavity surface emitting laser, or the like. A wavelength of the light source may be monochromatic or white light of a mixed spectrum. The picture modulation device may be a device like LCOS, a digital micromirror device (digital micromirror device, DMD), an LCD, or a micro-electromechanical system (micro-electromechanical system, MEMS). An active picture source may be used in the active projection solution. The active picture source is a picture modulation device, which can implement picture modulation by turning off and lighting up pixels of different colors. The picture modulation device of the active picture source may be an organic light-emitting diode (Organic Light-Emitting Diode, OLED), a micro organic light-emitting diode (Micro-OLED), mini light-emitting diode (Mini-LED), micro light-emitting diode (Micro-LED) array module, or the like.

FIG. 4 is a diagram of a structure of the PGU 300 using the passive projection solution. The PGU 300 includes a projector optical engine 310 and a diffuser (diffuser) 320. The diffuser 320 includes a third projection area and a fourth projection area. The projector optical engine 310 is configured to generate the light beam to be projected into the picture. The diffuser 320 evenly projects, to the first projection area of the optical assembly 400, the light beam that is for the first area picture and that is received in the third projection area. The diffuser 320 evenly projects, to the second projection area of the optical assembly 400, the second area picture received in the fourth projection area.

Specifically, the diffuser 320 is responsible for projecting, at different angles, the light beam that is to be projected into the first area picture and that is emitted by the projector optical engine 310 and the light beam that is to be projected into the second area picture and that is emitted by the projector optical engine 310, so that the light beam for the first area picture and the light beam for the second area picture are respectively projected to different projection areas of the optical assembly 400. That is, the third projection area 320-1 and the second projection area 320-2 of the diffuser 320 use different projection angles. The diffuser 320 may be a reflective diffuser or a transmissive diffuser. This is not specifically limited in embodiments of this application.

The following describes several structures of the projector optical engine 310.

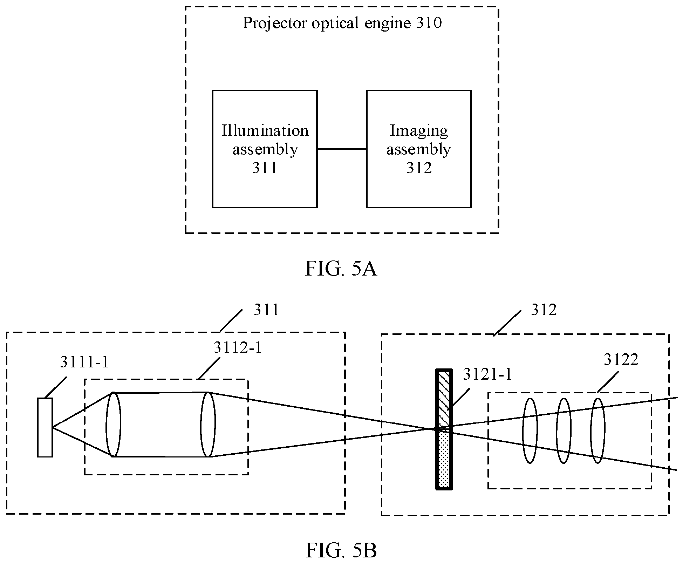

FIG. 5A is a diagram of a possible structure of the projector optical engine 310 using the passive picture source. The projector optical engine 310 includes an illumination assembly 311 and an imaging assembly 312. The illumination assembly 311 is configured to emit a light beam. The imaging assembly 312 is configured to modulate, onto a light beam emitted by a light source, the picture to be projected into including the first area picture and the second area picture.

Refer to FIG. 5B. The illumination assembly 311 may include a light source 3111-1 and a transmissive illumination optical path 3112-1. The imaging assembly 312 includes a picture modulation device 3121-1 and a projection lens 3122-1. After a light beam emitted by the light source 3111-1 passes through the transmissive illumination optical path 3112-1, the light beam is transmitted to the picture modulation device 3121-1, and then is projected by the projection lens 3122-1. The picture modulation device 3121-1 may be a transmissive modulation chip, for example, an LCD. The picture modulation device 3121-1 may include two areas, where one area is used to modulate the first area picture, and the other area is used to modulate the second area picture.

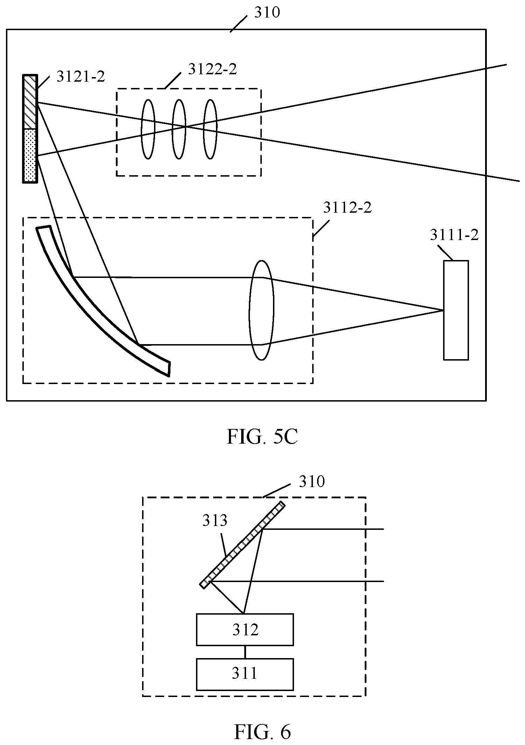

Refer to FIG. 5C. The illumination assembly 311 includes a light source 3111-2 and a reflective illumination optical path 3112-2. The imaging assembly 312 includes a picture modulation device 3121-2 and a projection lens 3122-2. A light beam emitted by the light source 3111-2 passes through the reflective illumination optical path 3112-2, is reflected to the picture modulation device 3121-2, and then is projected by the projection lens 3122-2. The picture modulation device 3121-2 may be a transmissive modulation chip, for example, a device like LCOS, a DMD, or an LCD. The picture modulation device 3121-2 may include two areas, where one area is used to modulate the first area picture, and the other area is used to modulate the second area picture.

In some embodiments, the transmissive modulation chip controls an incident angle of the light beam by using the illumination assembly 311, and the light beam is incident to the picture modulation device 3121-2 at a specific angle, so that the picture modulation device 3121-2 is in an optimal working state.

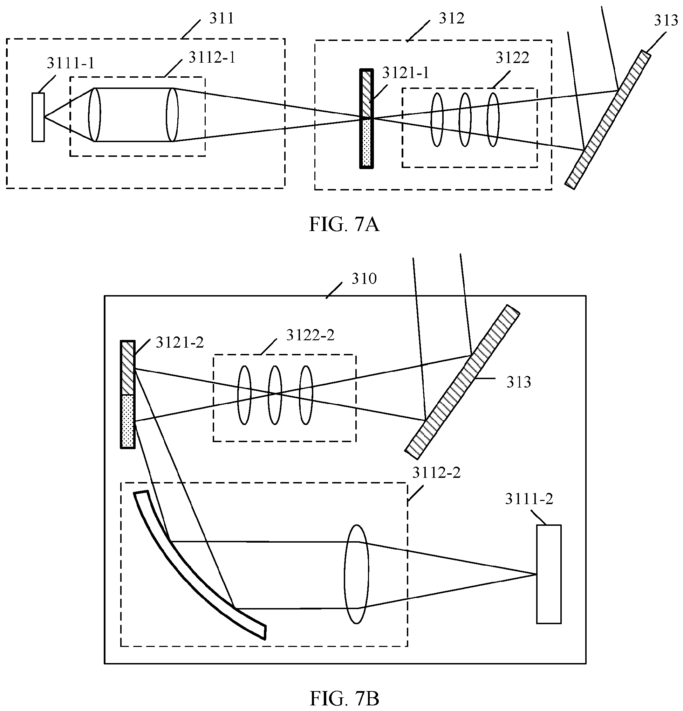

FIG. 6, FIG. 7A, and FIG. 7B are diagrams of another possible structure of the projector optical engine 310 using the passive picture source. The projector optical engine 310 includes an illumination assembly 311, an imaging assembly 312, and a reflector 313. A difference between the structure of the projector optical engine 310 shown in FIG. 6 and the structure of the projector optical engine shown in FIG. 5A lies in that, in the structure of the projector optical engine 310 shown in FIG. 6, the reflector 313 is added after the imaging assembly 312. The reflector 313 is configured to perform optical path folding for obtaining a more compact volume. The reflector 313 may be a curved-surface reflector or a planar reflector. This is not specifically limited in embodiments of this application. FIG. 7A and FIG. 7B are obtained based on FIG. 6 by using the illumination assembly 311 and the imaging assembly 312 with the structures in FIG. 5B and FIG. 5C.

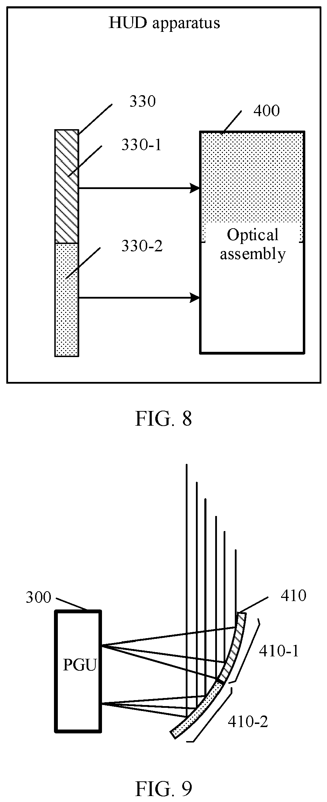

FIG. 8 is a diagram of a structure of the HUD apparatus using the active picture light-emitting source. The PGU 300 may use an active picture light-emitting source 330. The active picture light-emitting source 330 may be an OLED/Micro-OLED or a Micro/Mini-LED array panel, which performs area-based adjustment and control to display a picture source including the first area picture and the second area picture. Refer to FIG. 8. The active picture light-emitting source 330 includes a first partition 330-1 and a second partition 330-2. Compared with the structure of the PGU 300 using the passive picture source, the structure of the PGU 300 using the active picture source is simple and can be implemented without a projection system. Brightness of the active picture source is lower than brightness of the passive picture source.

### 2. Optical assembly 400

Refer to a HUD apparatus shown in FIG. 9. In a first possible manner, the optical assembly 400 may use a free-form primary mirror 410. The free-form primary mirror 410 includes a first curved-surface reflection area 410-1 (which may be understood as the first projection area) and a second curved-surface reflection area 410-2 (which may be understood as the second projection area). In the free-form primary mirror, a focal power in the first curved-surface reflection area 410-1 is different from a focal power in the second curved-surface reflection area 410-2.

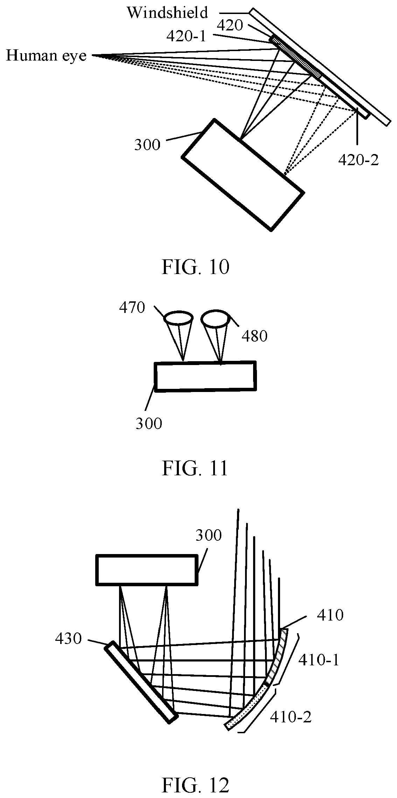

Refer to FIG. 10. In a second possible manner, the optical assembly 400 may include a holographic optical element (holographic optical element, HOE) thin film 420, the HOE thin film 420 is attached to a windshield, the HOE thin film 420 includes a projection area 420-1 and a projection area 420-2, and in the HOE thin film 420, a focal power in the projection area 420-1 is different from a focal power in the projection area 420-2. The HOE thin film 420 may be attached to an outer side of the windshield, or may be attached to an inner side of the windshield, or may be used as an interlayer of the windshield. This is not limited in this application.

The HOE thin film 420 may be specifically a volume Bragg grating (volume Bragg grating, VBG) or a surface relief grating (surface relief grating, SRG). An internal refractive index of the VBG periodically changes, and a surface structure of the SRG periodically changes, so that incident light can be modulated by using an internal refractive index grating or a relief grating, for reflection and focusing of the light.

Refer to a HUD apparatus shown in FIG. 11. In a third possible manner, the optical assembly 400 includes a first lens group 470 and a second lens group 480. The first lens group 470 includes one or more lenses. The second lens group 480 includes one or more lenses. A focal power of the first lens group 470 is different from a focal power of the second lens group 480. The PGU 300 projects the light beam for the first area picture to the first lens group 470. The PGU 300 projects the light beam for the second area picture to the second lens group 480.

In some embodiments, a reflector may be further deployed in the HUD apparatus to perform optical path folding, to reduce the volume of the HUD apparatus. A position of the reflector is not specifically limited in embodiments of this application.

For example, refer to a HUD apparatus shown in FIG. 12. The HUD apparatus further includes a reflector 430. In FIG. 12, for example, the optical assembly 400 uses the free-form primary mirror 410. The PGU 300 projects the light beam for the first area picture and the light beam for the second area picture to the reflector 430. The reflector 430 reflects the received light beam for the first area picture to the first curved-surface reflection area 410-1 of the free-form primary mirror, and reflects the received light beam for the second area picture to the second curved-surface reflection area 410-2 of the free-form primary mirror. The reflector 430 may be a planar reflector or a curved-surface reflector. This is not specifically limited in embodiments of this application. The free-form primary mirror 410 projects, to the windshield, the light beam that is for the first area picture and that is received in the first curved-surface reflection area 410-1 (corresponding to the first projection area of the optical assembly 400), and projects, to the windshield, the light beam that is for the second area picture and that is received in the second curved-surface reflection area 410-2 (corresponding to the second projection area of the optical assembly 400).

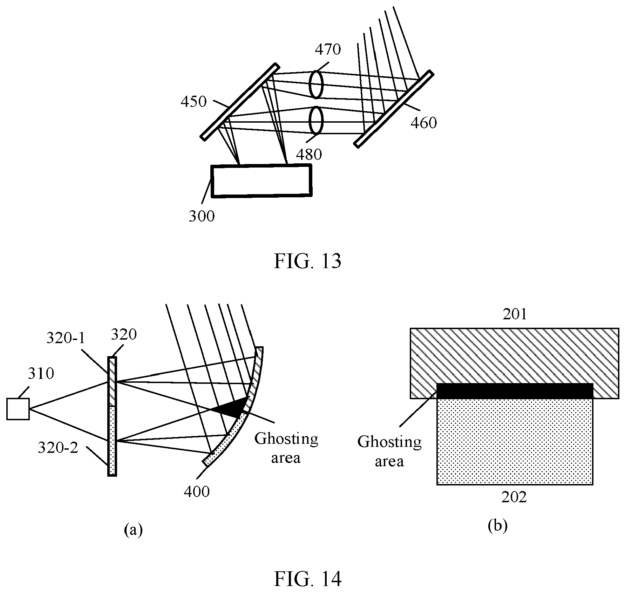

For another example, refer to a HUD apparatus shown in FIG. 13. The HUD apparatus includes a reflector 450 and a reflector 460. The PGU 300 emits the light beam to be projected into the picture, where the picture to be projected into includes the first area picture and the second area picture. It may be understood that the projector optical engine 310 emits the light beam to be projected into the first area picture and the light beam to be projected into the second area picture. The PGU 300 projects the light beam for the first area picture and the light beam for the second area picture to the reflector 450. The reflector 450 reflects the received light beam for the first area picture to the first lens group 470, and the light beam for the first area picture reaches a first reflection area of the reflector 460 after being transmitted by the first transmission group 470, and is reflected to the windshield through the first reflection area. The reflector 450 reflects the received light beam for the second area picture to the second lens group 480, and the light beam for the second area picture reaches a second reflection area of the reflector 460 after being transmitted by the second transmission group 480, and is reflected to the windshield through the second reflection area.

In some scenarios, because the PGU 300 projects the first area picture and the second area picture by using a same plane including two areas, and a distance between the two areas is short, the light beam for the first area picture and the light beam for the second area picture may overlap when reaching the optical assembly 400. As a result, crosstalk exists between the displayed first area picture and the displayed second area picture. In an example, a passive picture light-emitting source is used, and the optical assembly 400 uses the free-form primary mirror 410. The third projection area 320-1 and the fourth projection area 320-2 of the diffuser 320 are located on a same plane and are close to each other, so that a light beam that is emitted through the third projection area 320-1 and that reaches the free-form primary mirror 410 overlaps a light beam that is emitted through the fourth projection area 320-2 and that reaches the free-form primary mirror 410. As a result, crosstalk exists between a virtual image of the first area picture and a virtual image of the second area picture, that is, an image at a short virtual image distance (or referred to as a short-focus surface) includes a part of content at a long virtual image distance (or referred to as a long-focus surface), and an image at the long virtual image distance includes a part of content at the short virtual image distance. Refer to FIG. 14. For example, the first projection area 320-1 of the diffuser 320 corresponds to the image on the short-focus surface, and the second projection area 320-2 corresponds to the image on the long-focus surface. Refer to (a) in FIG. 14. The picture on the short-focus surface and the picture on the long-focus surface are located on one plane and are close to each other. When the pictures are separately projected to the two projection areas of the free-form primary mirror 410, a part of light of the picture on the short-focus surface is incident to an area that is of the picture on the long-focus surface and that is on the optical assembly 400. As a result, crosstalk occurs between a far virtual image surface and a near virtual image surface. In (b) in FIG. 14, for example, the long-focus surface is marked by using 201 and the short-focus surface is marked by using 202. Refer to (b) in FIG. 14. The picture on the long-focus surface 201 includes a part of the picture on the short-focus surface 202.

In accordance with the claimed invention, a ghost elimination assembly 500 is deployed in the HUD apparatus. The ghost elimination assembly 500 adjusts the light beams, so that the light beams that are of the two area pictures and that can pass through the first projection area and the second projection area of the optical assembly 400 do not interfere with each other. That is, the ghost elimination assembly 500 adjusts the light beam for the first area picture and/or the light beam for the second area picture that are/is input to the ghost elimination assembly 500, so that the light beam that is for the first area picture and that is emitted through the first projection area of the optical assembly 400 and the light beam that is for the second area picture and that is emitted through the second projection area of the optical assembly 400 do not interfere with each other (for example, do not overlap).

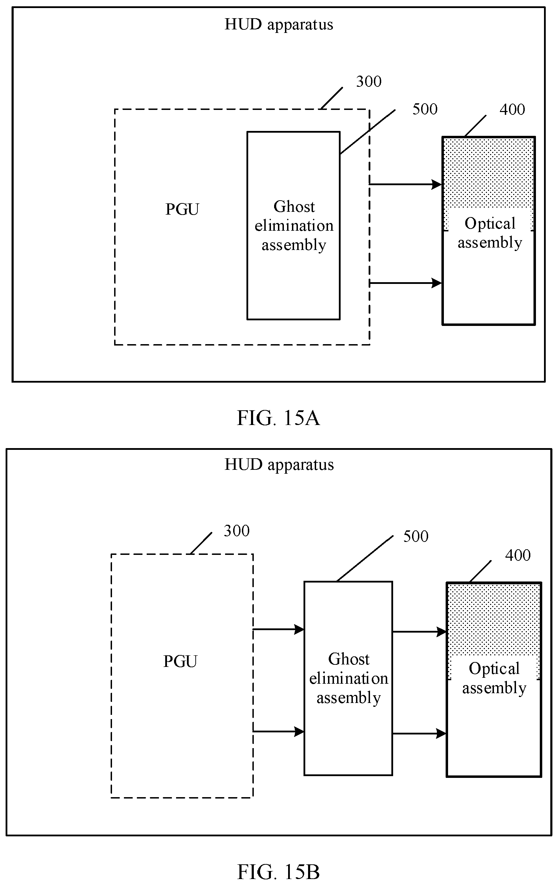

Refer to FIG. 15A and FIG. 15B. The ghost elimination assembly 500 may be deployed inside the PGU 300, which is not in accordance with the claimed invention. According to the claimed invention, the ghost elimination assembly 500 is deployed between the PGU 300 and an optical path of the optical assembly 400.

The following describes a structure of the ghost elimination assembly.

In a first possible implementation, not according to the claimed invention, the ghost elimination assembly uses an optical wedge.

### Example 1, not according to the claimed invention

The ghost elimination assembly 500 includes an optical wedge 510. The optical wedge 510 is located in an optical path through which a light beam for the first area picture is to reach the optical assembly 400.

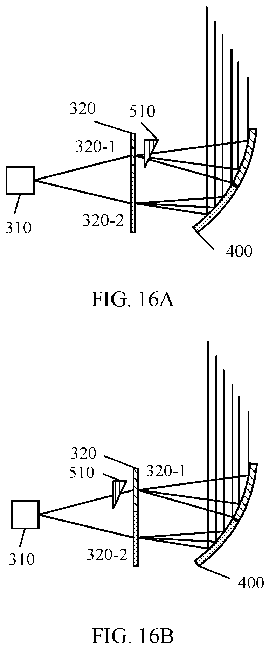

Refer to FIG. 16A. The PGU 300 using the passive picture light-emitting source is used as an example. The optical wedge 510 may be deployed between an optical path of the third projection area and an optical path of the first projection area of the diffuser 320.

The projector optical engine 310 emits the light beam to be projected into the first area picture and the light beam to be projected into the second area picture, and the light beams are respectively projected to the third projection area and the fourth projection area of the diffuser 320, that is, the light beam to be projected into the first area picture is projected to the third projection area 320-1 of the diffuser 320, and the light beam to be projected into the second area picture is projected to the fourth projection area 320-2 of the diffuser 320. After the light beam that is to be projected into the first area picture and that is projected through the third projection area 320-1 is refracted by the optical wedge 510, the light beam to be projected into the first area picture deflects in a direction away from the second projection area, so that after the light beam to be projected into the first area picture is refracted by the optical wedge 510, the light beam for the first area picture and the light beam for the second area picture are separated by a spacing. This avoids crosstalk.

It should be noted that the optical wedge 510 belongs to the PGU 300, that is, is deployed inside the PGU 300, or may not belong to the PGU 300, that is, is deployed outside the PGU 300.

Refer to FIG. 16B. The PGU 300 using the passive picture light-emitting source is used as an example. The optical wedge 510 is located between the projector optical engine 310 and an optical path of the first projection area of the diffuser 320. The projector optical engine 310 emits the light beam to be projected into the first area picture and the light beam to be projected into the second area picture. After the light beam to be projected into the first area picture passes through the optical wedge 510, an emission direction of the light beam to be projected into the first area picture is deflected, so that the light beam to be projected into the first area picture and the light beam to be projected into the second area picture are separated by a specific spacing before reaching the diffuser 320. In this way, the first projection area 320-1 of the diffuser 320 projects the light beam for the first area picture to the third projection area of the optical assembly 400, and the first projection area 320-2 of the diffuser 320 projects the light beam for the second area picture to the fourth projection area of the optical assembly 400. Because the light beam to be projected into the first area picture and the light beam to be projected into the second area picture are already separated by the specific spacing before reaching the diffuser 320, the light beam for the first area picture and the light beam for the second area picture do not overlap after reaching the optical assembly 400. Therefore, image crosstalk between the long-focus surface and the short-focus surface can be avoided.

### Example 2, not according to the claimed invention

The ghost elimination assembly 500 includes an optical wedge 520. The optical wedge 520 is located in an optical path through which a light beam for the second area picture is to reach the optical assembly 400.

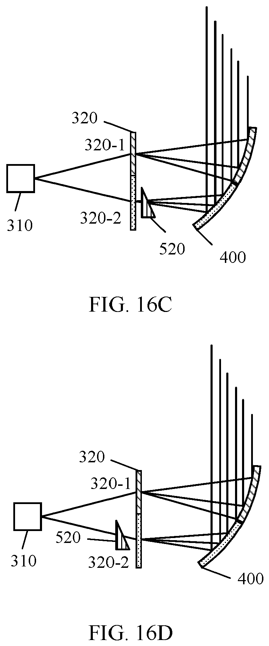

Refer to FIG. 16C. The PGU 300 using the passive picture light-emitting source is used as an example. The optical wedge 520 may be deployed between an optical path of the fourth projection area of the diffuser 320 and an optical path of the second projection area of the optical assembly 400. In FIG. 16C, the optical wedge 520 deflects, in a direction away from the first projection area of the optical assembly 400, the light beam that is projected through the fourth projection area of the diffuser 320 and that is to be projected into the second area picture, so that after the light beam to be projected into the second area picture is refracted by the optical wedge 520, the light beam that is for the second area picture and that reaches the optical assembly 400 and the light beam that is for the first area picture and that reaches the optical assembly 400 are separated by a spacing. This avoids image crosstalk between the long-focus surface and the short-focus surface.

Refer to FIG. 16D. The PGU 300 using the passive picture light-emitting source is used as an example. The optical wedge 520 is located between the projector optical engine 310 and an optical path of the fourth projection area of the diffuser 320. The projector optical engine 310 emits the light beam to be projected into the first area picture and the light beam to be projected into the second area picture. After the light beam to be projected into the second area picture passes through the optical wedge 520, an emission direction of the light beam to be projected into the second area picture is deflected, so that the light beam to be projected into the second area picture and the light beam to be projected into the first area picture are separated by a specific spacing before reaching the diffuser 320. In this way, the third projection area 320-1 of the diffuser 320 projects the light beam for the first area picture to the first projection area of the optical assembly 400, and the fourth projection area 320-2 of the diffuser 320 projects the light beam for the second area picture to the second projection area of the optical assembly 400. Because the light beam to be projected into the second area picture and the light beam to be projected into the first area picture are already separated by the specific spacing before reaching the diffuser 320, the light beam for the first area picture and the light beam for the second area picture do not overlap after reaching the optical assembly 400. Therefore, image crosstalk between the long-focus surface and the short-focus surface can be avoided.

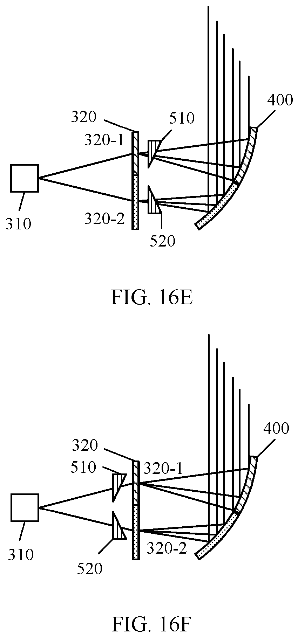

In some embodiments, an optical wedge may be deployed in each of the optical path of the light beam for the first area picture and the optical path of the light beam for the second area picture. For example, the ghost elimination assembly 500 includes an optical wedge 510 and an optical wedge 520, as shown in FIG. 16E and FIG. 16F. In FIG. 16E, the optical wedge 510 and the optical wedge 520 are deployed between the diffuser 320 and the optical assembly 400. In FIG. 16F, the optical wedge 510 and the optical wedge 520 are deployed between the projector optical engine 310 and the diffuser 320.

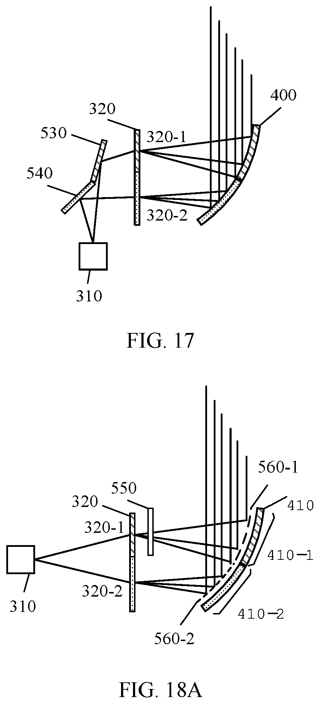

In a second possible implementation, not according to the claimed invention, the ghost elimination assembly uses a plurality of reflectors, and the reflector may be a planar reflector or a curved-surface reflector. For example, two planar reflectors are deployed in the PGU 300, which are respectively a planar reflector 530 and a planar reflector 540. The planar reflector 530 and the planar reflector 540 may be deployed at different positions of an optical path before the third projection area and the fourth projection area, and are configured to increase the spacing between the light beam that is for the first area picture and that reaches the optical assembly 400 and the light beam that is for the second area picture and that reaches the optical assembly 400. Refer to FIG. 17. The planar reflector 530 projects, to the third projection area of the diffuser 320, the light beam that is for the first area picture and that is generated by the projector optical engine 310, and the planar reflector 540 projects, to the fourth projection area of the diffuser 320, the light beam that is for the second area picture and that is generated by the projector optical engine 310.

In a third possible implementation, in accordance with the claimed invention, the ghost elimination assembly 500 adjusts polarization directions of the light beam for the first area picture and the light beam for the second area picture. For example, the polarization direction of the light beam for the first area picture is perpendicular to the polarization direction of the light beam for the second area picture. Therefore, even if there is an overlapping part between the light beam for the first area picture and the light beam for the second area picture, crosstalk can be avoided due to different polarization directions.

The ghost elimination assembly 500 uses at least one half-wave plate, and film layers that are attached to the first projection area and the second projection area of the optical assembly 400. The at least one half-wave plate may be deployed at different positions of an optical path before the first projection area and the second projection area. The film layer may be a reflective film or a transmissive film. For example, if a polarization direction of the film layer is A, the reflective film reflects light whose polarization direction is A, and shields light in another polarization direction. The transmissive film transmits light whose polarization direction is A, and shields light in another polarization direction.

### Manner 1

The ghost elimination assembly 500 includes a half-wave plate 550, a film layer 560-1, and a film layer 560-2. The film layer 560-1 is attached to the first projection area of the optical assembly 400, and the film layer 560-2 is attached to the second projection area of the optical assembly 400. The half-wave plate 550 may be deployed before an optical path through which the light beam for the first area picture reaches the film layer 560-1. A polarization direction of the film layer 560-1 is perpendicular to a polarization direction of the film layer 560-2.

Refer to FIG. 18A. For example, the PGU 300 uses the passive light-emitting source. The half-wave plate 550 is located between the third projection area of the diffuser 320 and an optical path of the film layer 560-1. The projector optical engine 310 emits the light beam to be projected into the first area picture and the light beam to be projected into the second area picture, and the light beams are respectively projected to the third projection area and the fourth projection area of the diffuser 320, that is, the light beam to be projected into the first area picture is projected to the third projection area 320-1 of the diffuser 320, and the light beam to be projected into the second area picture is projected to the fourth projection area 320-2 of the diffuser 320. After the light beam that is to be projected into the first area picture and that is projected through the third projection area 320-1 passes through the half-wave plate 550, the half-wave plate 550 adjusts the polarization direction of the light beam for the first area picture, so that the polarization direction of the light beam that is for the first area picture and that is emitted by the half-wave plate 550 is perpendicular to the polarization direction of the light beam for the second area picture projected through the fourth projection area 320-2. The polarization direction of the film layer 560-1 is perpendicular to the polarization direction of the light beam for the first area picture projected through the fourth projection area, that is, the polarization direction of the film layer 560-1 is the same as the polarization direction of the light beam that is for the first picture area and that is output by the half-wave plate 550. The polarization direction of the film layer 560-1 is perpendicular to the polarization direction of the film layer 560-2. If the light beam for the second area picture enters the film layer 560-1, the light beam is absorbed by the film layer 560-1. If the light beam for the first area picture enters the film layer 560-2, the light beam is absorbed by the film layer 560-2.

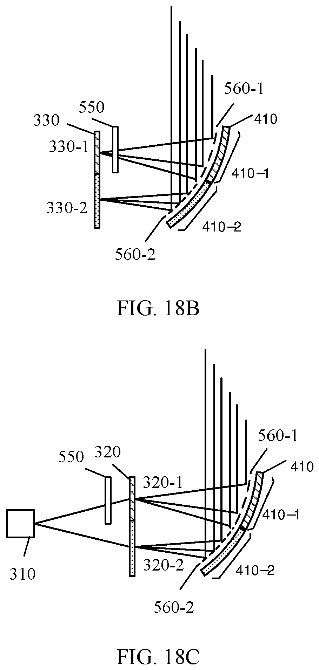

Refer to FIG. 18B. For example, the PGU 300 uses the active picture light-emitting source. The half-wave plate 550 is located between the projection area 330-1 of the active picture light-emitting source 330 and an optical path of the film layer 560-1. The polarization direction of the film layer 560-1 is perpendicular to the polarization direction of the light beam for the second area picture projected through the partition 330-2, and the polarization direction of the film layer 560-1 is the same as the polarization direction of the light beam that is for the first picture area and that is output by the half-wave plate 550.

Refer to FIG. 18C. For example, the PGU 300 uses the passive light-emitting source. The half-wave plate 550 is located between the projector optical engine 310 and an optical path of the third projection area 320-1 of the diffuser 320. The half-wave plate 550 adjusts the polarization direction of the light beam that is for the first area picture and that is emitted by the projector optical engine 310 to be perpendicular to the polarization direction of the light beam that is for the second area picture and that is emitted by the projector optical engine 310. The polarization direction of the film layer 560-1 is the same as the polarization direction of the light beam for the first area picture projected through the third projection area 320-1, and the polarization direction of the film layer 560-1 is the same as the polarization direction of the light beam that is for the first picture area and that is output by the half-wave plate 550. The polarization direction of the film layer 560-1 is perpendicular to the polarization direction of the film layer 560-2. If the light beam for the second area picture enters the film layer 560-1, the light beam is absorbed by the film layer 560-1. If the light beam for the first area picture enters the film layer 560-2, the light beam is absorbed by the film layer 560-2.

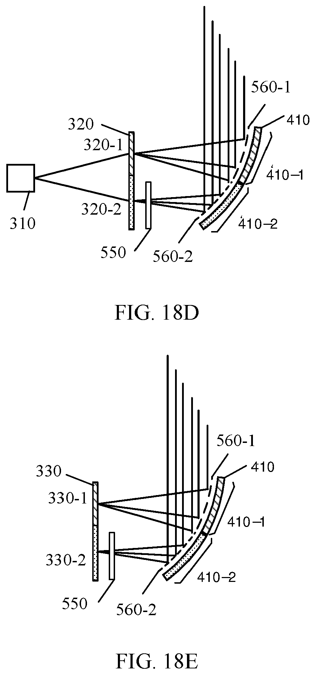

Refer to FIG. 18D. For example, the PGU 300 uses the passive light-emitting source. The half-wave plate 550 is located between the fourth projection area 320-2 of the diffuser 320 and an optical path of the film layer 560-2. Different from that in FIG. 18A, the polarization direction of the light beam for the second area picture changes after passing through the half-wave plate 550, so that the polarization direction of the light beam that is for the second area picture and that passes through the half-wave plate 550 is perpendicular to the polarization direction of the light beam for the first area picture projected through the first projection area. The polarization direction of the film layer 560-1 is the same as the polarization direction of the light beam for the first area picture projected through the third projection area 320-2, and the polarization direction of the film layer 560-2 is perpendicular to the polarization direction of the light beam that is for the second picture area and that is output by the half-wave plate 550. The polarization direction of the film layer 560-1 is perpendicular to the polarization direction of the film layer 560-2. If the light beam for the second area picture enters the film layer 560-1, the light beam is absorbed by the film layer 560-1. If the light beam for the first area picture enters the film layer 560-2, the light beam is absorbed by the film layer 560-2.

Refer to FIG. 18E. For example, the PGU 300 uses the active picture light-emitting source. The half-wave plate 550 is located between the projection area 330-2 of the active picture light-emitting source 330 and the optical path of the film layer 560-2. The polarization direction of the film layer 560-1 is the same as the polarization direction of the light beam for the first area picture projected through the partition 330-1, and the polarization direction of the film layer 560-2 is the same as the polarization direction of the light beam that is for the second picture area and that is output by the half-wave plate 550.

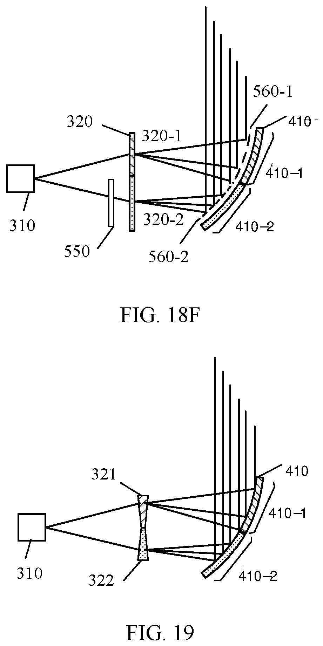

Refer to FIG. 18F. For example, the PGU 300 uses the passive light-emitting source. The half-wave plate 550 is located between the projector optical engine 310 and an optical path of the fourth projection area 320-2. The half-wave plate 550 adjusts the polarization direction of the light beam that is for the second area picture and that is emitted by the projector optical engine 310 to be perpendicular to the polarization direction of the light beam that is for the first area picture and that is emitted by the projector optical engine 310. The polarization direction of the film layer 560-1 is the same as the polarization direction of the light beam for the first area picture projected through the third projection area 320-1, and the polarization direction of the film layer 560-2 is same as the polarization direction of the light beam that is for the second picture area and that is output by the half-wave plate 550. The polarization direction of the film layer 560-1 is perpendicular to the polarization direction of the film layer 560-2. If the light beam for the second area picture enters the film layer 560-1, the light beam is absorbed by the film layer 560-1. If the light beam for the first area picture enters the film layer 560-2, the light beam is absorbed by the film layer 560-2.

In a fourth example, not according to the claimed invention, the diffuser 320 may be two diffusers of an optical wedge structure, which are a diffuser 321 and a diffuser 322. Refer to FIG. 19. The diffuser 321 and the diffuser 322 that use the optical wedge structure are used, so that there is a specific spacing between the light beam that is for the first area picture and that is output by the diffuser 321 and the light beam that is for the second area picture and that is output by the diffuser 322. In this way, the light beam for the first area picture and the light beam for the second area picture do not overlap after reaching the optical assembly 400. This avoids image crosstalk between the long-focus surface and the short-focus surface.

Based on the foregoing content, the following provides, with reference to a specific hardware structure, a diagram of an architecture of a HUD system that includes the HUD apparatus and the windshield and that is used in a vehicle, to facilitate further understanding of the HUD apparatus and an implementation process in which the HUD apparatus is used to display virtual images at different virtual image distances.

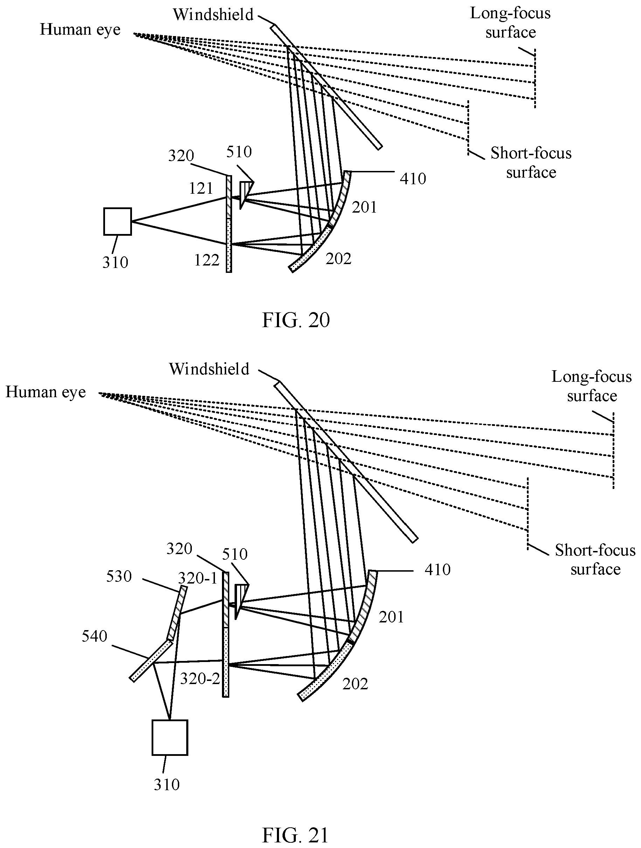

FIG. 20 is a diagram of a structure of a HUD system, not according to the claimed invention. The HUD system includes a HUD apparatus and a windshield. In FIG. 20, for example, the picture generation unit PGU 300 uses a passive picture source, the ghost elimination assembly uses an optical wedge, and the optical assembly 400 uses a free-form primary mirror. For example, the first curved-surface reflection area 410-1 of the free-form primary mirror 410 corresponds to the short-focus surface, and the second curved-surface reflection area 410-2 of the free-form primary mirror 410 corresponds to the long-focus surface. Herein, for ease of description, the first curved-surface reflection area is referred to as a free-form short-focus area 201, and the second curved-surface reflection area 410-2 is referred to as a free-form long-focus area 202. The HUD system includes the projector optical engine 310, the diffuser 320, the optical wedge 510, the free-form primary mirror 410, and a windshield 600. The projector optical engine 310 emits the light beam to be projected into the picture. The light beam to be projected into includes the first area picture and the second area picture. That is, the projector optical engine 310 emits the light beam to be projected into the first area picture and the light beam to be projected into the second area picture. The light beams are respectively projected to two areas of the diffuser 320, which are respectively the third projection area 320-1 (which may be referred to as a short-focus surface area) and the fourth projection area 320-2 (a long-focus surface area). For a deployment position of the optical wedge 510, refer to FIG. 16A to FIG. 16F. Details are not described herein again. In FIG. 20, for example, the optical wedge 510 is deployed between the short-focus surface area and the free-form primary mirror 410. After the light beam for the first area picture projected through the short-focus surface area 121 passes through the optical wedge 510, the light beam for the first area picture is deflected, and the light beam for the second area picture is projected to the first curved-surface reflection area 410-1 and the second curved-surface reflection area 410-2 of the free-form primary mirror 410. Herein, for ease of description the first curved-surface reflection area is referred to as the free-form short-focus area 201, and the second curved-surface reflection area 410-2 is referred to as the free-form long-focus area 202. Further, the free-form short-focus area 201 projects, to the windshield, the light beam to be projected into the first area picture, and the free-form long-focus area 202 projects, to the windshield, the light beam to be projected into the second area picture. The light beam for the first area picture and the light beam for the second area picture are reflected to a human eye through the windshield. Finally, two images corresponding to the short-focus surface 501 and the long-focus surface 502 are presented for the human eye. The first area picture is displayed in the image on the short-focus surface 501, and the second area picture is displayed in the image on the long-focus surface 502.

FIG. 21 is a diagram of another structure of the HUD system, not according to the claimed invention. In FIG. 21, for example, the picture generation unit PGU 300 uses a passive picture source, the ghost elimination assembly uses two planar reflectors, and the optical assembly uses a free-form primary mirror. For example, the first curved-surface reflection area 410-1 of the free-form primary mirror 410 corresponds to the short-focus surface, and the second curved-surface reflection area 410-2 of the free-form primary mirror 410 corresponds to the long-focus surface. Herein, for ease of description the first curved-surface reflection area is referred to as the free-form short-focus area 201, and the second curved-surface reflection area 410-2 is referred to as the free-form long-focus area 202. The HUD system includes the projector optical engine 310, the diffuser 320, the planar reflector 530, the planar reflector 540, the optical wedge 510, the free-form primary mirror 410, and the windshield 600. The projector optical engine 310 emits the light beam to be projected into the picture. The to-be-projected light beam includes the first area picture and the second area picture. That is, the projector optical engine 310 emits the light beam to be projected into the first area picture and the light beam to be projected into the second area picture. The planar reflector 530 projects, to the third projection area 320-1 (which may be referred to as a short-focus surface area) of the diffuser 320, the light beam that is for the first area picture and that is generated by the projector optical engine 310, and the reflector 540 projects, to the fourth projection area 320-2 (a long-focus surface area) of the diffuser 320, the light beam that is for the second area picture and that is generated by the projector optical engine 310. The light beam for the first area picture is projected to the free-form short-focus area 201 through the short-focus surface area, and the light beam for the second area picture is projected to the free-form long-focus area 202 through the long-focus surface area. Further, the light beam to be projected into the first area picture is projected to the windshield 600 through the free-form short-focus area 201, and the light beam to be projected into the second area picture is projected to the windshield 600 through the free-form long-focus area 202. The light beam for the first area picture and the light beam for the second area picture are reflected to a human eye through the windshield. Finally, two images corresponding to the short-focus surface and the long-focus surface are presented for the human eye. The first area picture is displayed in the image on the short-focus surface, and the second area picture is displayed in the image on the long-focus surface.

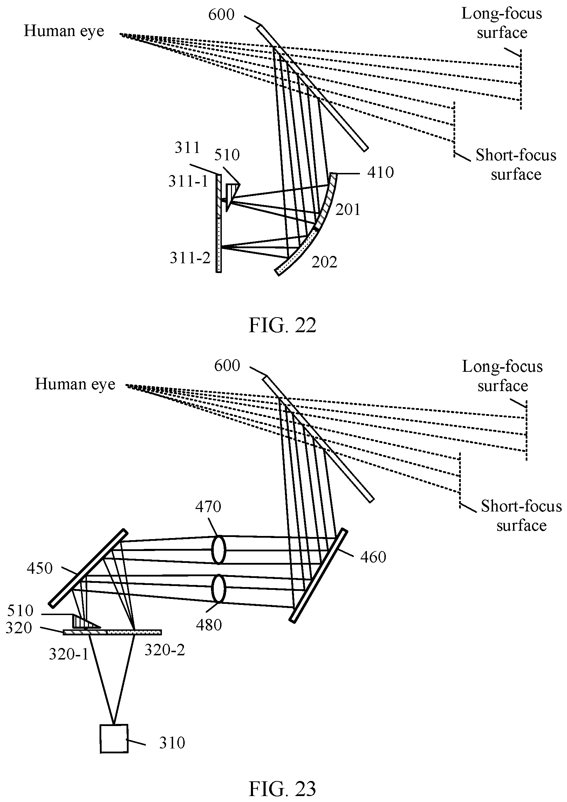

FIG. 22 is a diagram of another structure of the HUD system, not according to the claimed invention. In FIG. 22, for example, the picture generation unit PGU 300 uses the active picture source 330, and the optical assembly uses a free-form primary mirror. For example, the first curved-surface reflection area 410-1 of the free-form primary mirror 410 corresponds to the short-focus surface, and the second curved-surface reflection area 410-2 of the free-form primary mirror 410 corresponds to the long-focus surface. Herein, for ease of description the first curved-surface reflection area is referred to as the free-form short-focus area 201, and the second curved-surface reflection area 410-2 is referred to as the free-form long-focus area 202. The HUD system includes the active picture source 330, the free-form primary mirror 410, and the windshield 600. The active picture source 330 emits the light beam to be projected into the picture. The light beam to be projected into includes the first area picture and the second area picture. The active picture source 330 includes two partitions, which are referred to as the partition 330-1 and the partition 330-2 in FIG. 22. The light beam to be projected into the first area picture is emitted through the partition 330-1, and the light beam to be projected into the second area picture is emitted through the partition 330-2. The HUD system further includes an optical wedge. For a deployment position of the optical wedge, refer to FIG. 16A to FIG. 16F. Details are not described herein again. In FIG. 22, for example, the HUD system includes the optical wedge 510. After the light beam for the first area picture projected through the partition 330-1 passes through the optical wedge 510, the light beam for the first area picture is deflected, and is projected to the free-form short-focus area 201 of the free-form primary mirror 410. The light beam for the second area picture is projected to the free-form long-focus area 202 of the free-form primary mirror 410 through the partition 330-2. Further, the light beam to be projected into the first area picture is projected to the windshield 600 through the free-form short-focus area 201, and the light beam to be projected into the second area picture is projected to the windshield 600 through the free-form long-focus area 202. The light beam for the first area picture and the light beam for the second area picture are reflected to a human eye through the windshield. Finally, two images corresponding to the short-focus surface and the long-focus surface are presented for the human eye. The first area picture is displayed in the image on the short-focus surface, and the second area picture is displayed in the image on the long-focus surface.

FIG. 23 is a diagram of still another structure of the HUD system, not according to the claimed invention. In FIG. 23, for example, the picture generation unit PGU 300 uses the passive picture source, the optical assembly 400 uses the structure shown in 17, and the ghost elimination assembly uses an optical wedge. The HUD system includes the projector optical engine 310, the diffuser 320, the optical wedge, and the optical assembly 400. For example, the HUD system includes the optical wedge 510. For example, the optical assembly 400 includes the reflector 450, the reflector 460, the first lens group 470, and the second lens group 480. The first lens group 470 includes one or more lenses. The second lens group 480 includes one or more lenses. The focal power of the first lens group 470 is different from the focal power of the second lens group 480. The projector optical engine 310 emits the light beam to be projected into the picture, where the picture to be projected into includes the first area picture and the second area picture. It may be understood that the projector optical engine 310 emits the light beam to be projected into the first area picture and the light beam to be projected into the second area picture. The light beams are respectively projected to two areas of the diffuser 320, which are respectively the third projection area 320-1 (which may be referred to as a short-focus surface area) and the fourth projection area 320-2 (which may be referred to as a long-focus surface area). After the light beam for the first area picture projected through the short-focus surface area passes through the optical wedge 510, the light beam for the first area picture is deflected, and is projected to the reflector 450. The light beam for the second area picture is projected to the reflector 450 through the long-focus surface area. The reflector 450 reflects the received light beam for the first area picture to the first lens group 470, and the light beam for the first area picture reaches the first reflection area of the reflector 460 after being transmitted by the first transmission group, and is reflected to the windshield through the first reflection area. The reflector 450 reflects the received light beam for the second area picture to the second lens group 480, and the light beam for the second area picture reaches the second reflection area of the reflector 460 after being transmitted by the second transmission group 480, and is reflected to the windshield through the second reflection area. The light beam for the first area picture and the light beam for the second area picture are reflected to a human eye through the windshield. Finally, two images corresponding to the short-focus surface and the long-focus surface are presented for the human eye. The first area picture is displayed in the image on the short-focus surface, and the second area picture is displayed in the image on the long-focus surface.

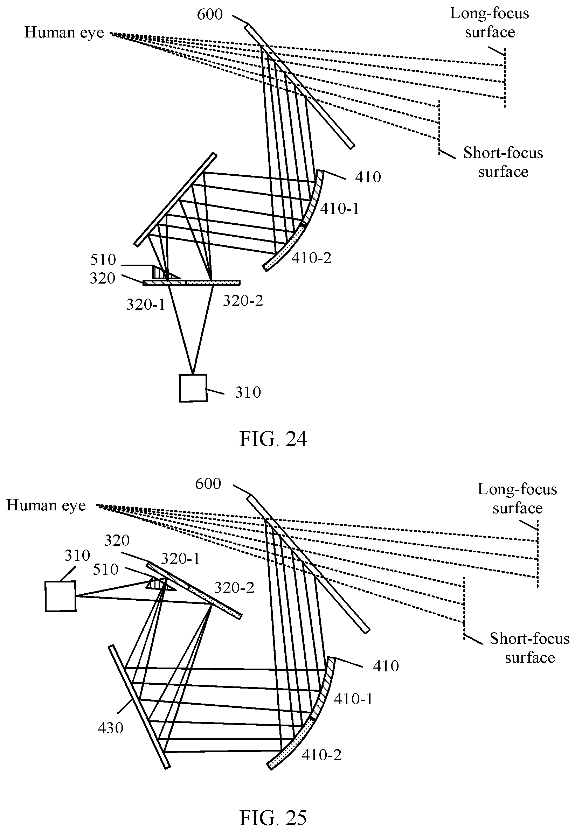

FIG. 24 is a diagram of still another structure of the HUD system, not according to the claimed invention. In FIG. 24, for example, the picture generation unit PGU 300 uses the passive picture source, the optical assembly 400 uses the free-form primary mirror 410, and the ghost elimination assembly uses the optical wedge 510. The HUD system includes the projector optical engine 310, the diffuser 320, the optical wedge 510, the reflector 430, the free-form primary mirror 410, and the windshield 600. For example, the diffuser 320 is a transmissive diffuser. The projector optical engine 310 emits the light beam to be projected into the picture. The light beam to be projected into includes the first area picture and the second area picture. That is, the projector optical engine 310 emits the light beam to be projected into the first area picture and the light beam to be projected into the second area picture. The light beams are respectively projected to two areas of the diffuser 320, which are respectively the third projection area 320-1 (which may be referred to as a short-focus surface area) and the fourth projection area 320-2 (which may be referred to as a long-focus surface area). After the light beam for the first area picture is transmitted through the short-focus surface area, the light beam for the first area picture is deflected by the optical wedge 510, and is projected to the reflector 430. The light beam for the second area picture is transmitted to the reflector 430 through the long-focus surface area. The reflector 430 reflects the received light beam for the first area picture to the first curved-surface reflection area 410-1 of the free-form primary mirror 410, and reflects, to the second curved-surface reflection area 410-2 of the free-form primary mirror, the received light beam that is for the second area picture and that is transmitted through the long-focus surface area. The free-form primary mirror 410 projects, to the windshield, the light beam that is for the first area picture and that is received in the first curved-surface reflection area 410-1, and projects, to the windshield, the light beam that is for the second area picture and that is received in the second curved-surface reflection area 410-2. In the free-form primary mirror 410, a focal power in the first curved-surface reflection area 410-1 is different from a focal power in the second curved-surface reflection area 410-2. The light beam for the first area picture and the light beam for the second area picture are reflected to a human eye through the windshield. Finally, two images corresponding to the short-focus surface and the long-focus surface are presented for the human eye. The first area picture is displayed in the image on the short-focus surface, and the second area picture is displayed in the image on the long-focus surface.

FIG. 25 is a diagram of still another structure of the HUD system, not according to the claimed invention. In FIG. 25, a reflective diffuser is used as an example. For example, the optical assembly 400 uses the free-form primary mirror 410, the ghost elimination assembly uses an optical wedge, and the ghost elimination assembly 500 includes the optical wedge 510. The HUD system includes the projector optical engine 310, the diffuser 320, the optical wedge 510, the reflector 430, the free-form primary mirror 440, and the windshield 500. For example, the diffuser 320 is a transmissive diffuser. The projector optical engine 310 emits the light beam to be projected into the picture. The light beam to be projected into includes the first area picture and the second area picture. That is, the projector optical engine 310 emits the light beam to be projected into the first area picture and the light beam to be projected into the second area picture. The light beams are respectively projected to two areas of the diffuser 320, which are respectively the third projection area 320-1 (which may be referred to as a short-focus surface area) and the fourth projection area 320-2 (which may be referred to as a long-focus surface area). In FIG. 25, for example, the optical wedge 510 is deployed between the short-focus surface area and the reflector 430. After the light beam for the first area picture is reflected through the short-focus surface area, the light beam for the first area picture is deflected by the optical wedge 510, and is projected to the reflector 430. The light beam for the second area picture is reflected to the reflector 430 through the long-focus surface area. The reflector 430 reflects the received light beam for the first area picture to the first curved-surface reflection area 410-1 of the free-form primary mirror, and reflects the received light beam for the second area picture to the second curved-surface reflection area 410-2 of the free-form primary mirror. The free-form primary mirror 410 projects, to the windshield, the light beam that is for the first area picture and that is received in the first curved-surface reflection area 410-1, and projects, to the windshield, the light beam that is for the second area picture and that is received in the second curved-surface reflection area 410-2. In the free-form primary mirror 410, a focal power in the first curved-surface reflection area 410-1 is different from a focal power in the second curved-surface reflection area 410-2. The light beam for the first area picture and the light beam for the second area picture are reflected to a human eye through the windshield. Finally, two images corresponding to the short-focus surface and the long-focus surface are presented for the human eye. The first area picture is displayed in the image on the short-focus surface, and the second area picture is displayed in the image on the long-focus surface.

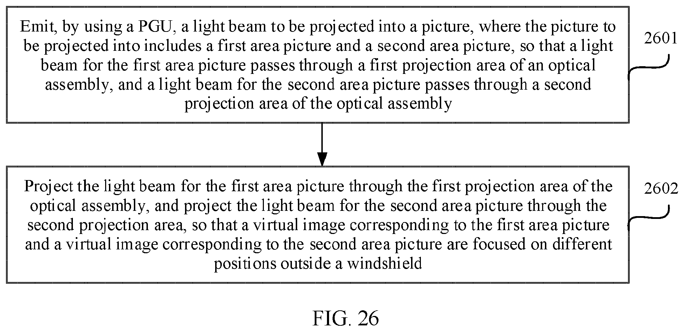

Based on the foregoing content and a same concept, this application provides a virtual-image position adjustment method. For details, refer to descriptions of FIG. 26. The head-up display method may be applied to the HUD apparatus according to any one of the foregoing embodiments. As shown in FIG. 26, the head-up display method includes the following steps.

2601: Emit, by using a PGU, a light beam to be projected into a picture, where the picture to be projected into includes a first area picture and a second area picture, so that a light beam for the first area picture passes through a first projection area of an optical assembly, and a light beam for the second area picture passes through a second projection area of the optical assembly. A focal power of a part of the optical assembly through which an optical path of the light beam for the first area picture passes is different from a focal power of a part of the optical assembly through which an optical path of the light beam for the second area picture passes.

2602: Project the light beam for the first area picture through the first projection area of the optical assembly, and project the light beam for the second area picture through the second projection area, so that a virtual image corresponding to the first area picture and a virtual image corresponding to the second area picture are focused on different positions outside a windshield.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In embodiments of this application, and/or describes an association relationship between associated objects, and represents that three relationships may exist. For example, A and/or B may represent the following cases: Only A exists, both A and B exist, and only B exists, where A and B may be singular or plural. In text descriptions of this application, the character "/" generally indicates an "or" relationship between associated objects. In a formula of this application, the character "/" indicates a "division" relationship between associated objects. In addition, in this application, the term "for example" is used to represent giving an example, an illustration, or a description. Any embodiment or design scheme described as an "example" in this application should not be explained as being more preferred or having more advantages than another embodiment or design scheme. Alternatively, it may be understood as that the word "example" is used to present a concept in a specific manner, and does not constitute a limitation on this application.

It may be understood that, in this application, various numeric numbers are distinguished merely for ease of description and are not used to limit the scope of the embodiments of this application. Sequence numbers of the foregoing processes do not mean an execution sequence, and the execution sequence of the processes should be determined based on functions and internal logic of the processes. The terms "first", "second", and the like are used to distinguish between similar objects without having to describe a specific order or sequence. In addition, the terms "include", "have", and any variant thereof are intended to cover non-exclusive inclusion, for example, include a series of steps or units. For example, a method, system, product, or device is not necessarily limited to those steps or units expressly listed, but may include other steps or units not expressly listed or inherent to such a process, method, product, or device.

Although this application is described with reference to specific features and embodiments thereof, it is clear that various modifications and combinations may be made to them without departing from the scope of this application. Correspondingly, this specification and the accompanying drawings are merely example descriptions of solutions defined by the appended claims.

It is clear that a person skilled in the art can make various modifications and variations to this application. In this case, this application is intended to cover these modifications and variations of the embodiments of this application provided that they fall within the scope of protection defined by the following claims.

## Claims

1. A head-up display apparatus, comprising a picture generation unit, PGU (300), and an optical assembly (400), wherein
the PGU (300) is configured to: generate a light beam to be projected into a picture, wherein the picture to be projected into comprises a first area picture and a second area picture; emit a light beam for the first area picture, so that the light beam for the first area picture passes through a first projection area of the optical assembly (400); and emit a light beam for the second area picture, so that the light beam for the second area picture passes through a second projection area of the optical assembly (400); and
a focal power of a part of the optical assembly (400) through which an optical path of the light beam for the first area picture passes is different from a focal power of a part of the optical assembly (400) through which an optical path of the light beam for the second area picture passes,
wherein the apparatus further comprises a ghost elimination assembly (500), and the ghost elimination assembly (500) is configured to adjust the light beam for the first area picture and/or the light beam for the second area picture that are/is input to the ghost elimination assembly (500), so that the light beam that is for the first area picture and that is emitted through the first projection area of the optical assembly (400) does not overlap the light beam that is for the second area picture and that is emitted through the second projection area of the optical assembly (400),
**characterized in that**
the optical assembly (400) comprises a free-form primary mirror (410), wherein the free-form primary mirror (410) includes a first curved-surface reflection area (410-1) as the first projection area and a second curved-surface reflection area (410-2) as the second projection area, and wherein a focal power in the first curved-surface reflection area (410-1) is different from a focal power in the second curved-surface reflection area (410-2),
and **in that**
the ghost elimination assembly (500) comprises at least one first half-wave plate (550), a first film layer (560-1), and a second film layer (560-2), the first film layer (560-1) is attached to the first projection area of the optical assembly (400), and the second film layer (560-2) is attached to the second projection area of the optical assembly (400); and
the at least one first half-wave plate (550) is located between the PGU (300) and an optical path of the first projection area, and a polarization direction of the light beam for the first area picture adjusted by the at least one first half-wave plate (550) is perpendicular to a polarization direction of the light beam for the second area picture projected by the PGU (300), wherein a polarization direction of the first film layer (560-1) is perpendicular to a polarization direction of the light beam for the first area picture projected by the PGU (300), and the polarization direction of the first film layer (560-1) is perpendicular to a polarization direction of the second film layer; or
the at least one first half-wave plate (550) is located between the PGU (300) and an optical path of the second projection area, and a polarization direction of the light beam for the second area picture adjusted by the at least one half-wave plate (550) is perpendicular to a polarization direction of the light beam for the first area picture projected by the PGU (300), wherein a polarization direction of the first film layer (560-1) is the same as the polarization direction of the light beam for the first area picture projected by the PGU (300), and the polarization direction of the first film layer (560-1) is perpendicular to a polarization direction of the second film layer.

2. The apparatus according to claim 1, wherein the PGU (300) comprises a projector optical engine (310) and a diffuser (320), and the projector optical engine (310) is configured to generate the light beam to be projected into the picture;
the diffuser (320) comprises a third projection area and a fourth projection area; and
the diffuser (320) is configured to: evenly project, to the first projection area of the optical assembly (400), the light beam that is for the first area picture and that is received in the third projection area; and evenly project, to the second projection area of the optical assembly (400), the light beam that is for the second area picture and that is received in the fourth projection area.

3. The apparatus according to claim 2, wherein the ghost elimination assembly (500) comprises at least one second half-wave plate, a third film layer, and a fourth film layer, the third film layer is attached to the first projection area of the optical assembly (400), and the fourth film layer is attached to the second projection area of the optical assembly (400); and
the at least one second half-wave plate is located between the projector optical engine (310) and an optical path of the third projection area, and a polarization direction of the light beam for the first area picture adjusted by the at least one second half-wave plate is perpendicular to a polarization direction of the light beam for the second area picture projected by the projector optical engine (310), wherein a polarization direction of the first film layer is perpendicular to a polarization direction of the light beam for the first area picture projected by the projector optical engine (310), and the polarization direction of the first film layer is perpendicular to a polarization direction of the second film layer; or
the at least one second half-wave plate is located between the projector optical engine (310) and an optical path of the first projection area, and a polarization direction of the light beam for the second area picture adjusted by the at least one second half-wave plate is perpendicular to a polarization direction of the light beam for the first area picture projected by the projector optical engine (310), wherein a polarization direction of the first film layer is the same as the polarization direction of the light beam for the first area picture projected by the projector optical engine (310), and the polarization direction of the first film layer is perpendicular to a polarization direction of the second film layer.

4. The apparatus according to any one of claims 1 to 3, wherein the head-up display apparatus further comprises a first reflector (313), wherein
the first reflector (313) is configured to: perform optical path folding on the light beam for the first area picture projected by the PGU (300), so that the light beam for the first area picture is reflected to the first projection area of the free-form primary mirror (410); and perform optical path folding on the light beam for the second area picture projected by the PGU (300), so that the light beam for the second area picture is reflected to the second projection area of the free-form primary mirror (410).

5. A vehicle, comprising the head-up display apparatus according to any one of claims 1 to 4.

6. A head-up display method, wherein the head-up display method is implemented in a head-up display apparatus, and the head-up display apparatus comprises a picture generation unit, PGU, and an optical assembly; and the head-up display method comprises:
emitting (2601), by using the PGU, a light beam to be projected into a picture, wherein the picture to be projected into comprises a first area picture and a second area picture, so that a light beam for the first area picture passes through a first projection area of the optical assembly, and a light beam for the second area picture passes through a second projection area of the optical assembly, wherein
a focal power of a part of the optical assembly through which an optical path of the light beam for the first area picture passes is different from a focal power of a part of the optical assembly through which an optical path of the light beam for the second area picture passes, so that a virtual image corresponding to the first area picture and a virtual image corresponding to the second area picture are focused on different positions outside a windshield,
wherein the optical assembly comprises a free-form primary mirror, wherein the free-form primary mirror includes a first curved-surface reflection area as the first projection area and a second curved-surface reflection area as the second projection area, and wherein a focal power in the first curved-surface reflection area is different from a focal power in the second curved-surface reflection area,
wherein the head-up display apparatus further comprises a ghost elimination assembly; and the method further comprises:
adjusting, by using the ghost elimination assembly, the light beam for the first area picture and/or the light beam for the second area picture that are/is input to the ghost elimination assembly, so that the light beam that is for the first area picture and that is emitted through the first projection area of the optical assembly does not overlap the light beam that is for the second area picture and that is emitted through the second projection area of the optical assembly, and
wherein the ghost elimination assembly comprises at least one first half-wave plate, a first film layer, and a second film layer, the first film layer is attached to the first projection area of the optical assembly, and the second film layer is attached to the second projection area of the optical assembly; and
the adjusting, by using the ghost elimination assembly, the light beam for the first area picture and/or the light beam for the second area picture that are/is input to the ghost elimination assembly comprises:
the at least one first half-wave plate is located between the PGU and an optical path of the first projection area, adjusting, by using the at least one half-wave plate, a polarization direction of the light beam for the first area picture projected by the PGU to be perpendicular to a polarization direction of the light beam for the second area picture projected by the PGU, wherein a polarization direction of the first film layer is perpendicular to the polarization direction of the light beam for the first area picture projected by the PGU, and the polarization direction of the first film layer is perpendicular to a polarization direction of the second film layer; or
the at least one first half-wave plate is located between the PGU and an optical path of the first projection area, adjusting, by using the at least one half-wave plate, a polarization direction of the light beam for the second area picture to be perpendicular to a polarization direction of the light beam for the first area picture projected by the PGU, wherein a polarization direction of the first film layer is the same as the polarization direction of the light beam for the first area picture projected by the PGU, and the polarization direction of the first film layer is perpendicular to a polarization direction of the second film layer.

## Patentansprüche

1. Head-up-Display-Einrichtung, die eine Bilderzeugungseinheit, PGU (300) und eine optische Baugruppe (400) umfasst, wobei
die PGU (300) zu Folgendem ausgelegt ist: Erzeugen eines in ein Bild zu projizierenden Lichtstrahls, wobei das Bild, in das projiziert werden soll, ein Erstbereichsbild und ein Zweitbereichsbild umfasst; Emittieren eines Lichtstrahls für das Erstbereichsbild, sodass der Lichtstrahl für das Erstbereichsbild durch einen ersten Projektionsbereich der optischen Baugruppe (400) hindurchgeht; und Emittieren eines Lichtstrahls für das Zweitbereichsbild, sodass der Lichtstrahl für das Zweitbereichsbild durch einen zweiten Projektionsbereich der optischen Baugruppe (400) hindurchgeht; und
eine Brechkraft eines Teils der optischen Baugruppe (400), durch den ein optischer Pfad des Lichtstrahls für das Erstbereichsbild hindurchgeht, von einer Brechkraft eines Teils der optischen Baugruppe (400), durch den ein optischer Pfad des Lichtstrahls für das Zweitbereichsbild hindurchgeht, verschieden ist,
wobei die Einrichtung ferner eine "Ghost"-Eliminierungsbaugruppe (500) umfasst und die "Ghost"-Eliminierungsbaugruppe (500) dazu ausgelegt ist, den Lichtstrahl für das Erstbereichsbild und/oder den Lichtstrahl für das Zweitbereichsbild, der bzw. die in die "Ghost"-Eliminierungsbaugruppe (500) eingegeben werden/wird, anzupassen, sodass der Lichtstrahl, der für das Erstbereichsbild bestimmt ist und der durch den ersten Projektionsbereich der optischen Baugruppe (400) emittiert wird, den Lichtstrahl, der für das Zweitbereichsbild bestimmt ist und der durch den zweiten Projektionsbereich der optischen Baugruppe (400) emittiert wird, nicht überlappt,
**dadurch gekennzeichnet, dass**
die optische Baugruppe (400) einen Freiform-Primärspiegel (410) umfasst, wobei der Freiform-Primärspiegel (410) einen ersten Reflexionsbereich (410-1) mit gekrümmter Oberfläche als den ersten Projektionsbereich und einen zweiten Reflexionsbereich (410-2) mit gekrümmter Oberfläche als den zweiten Projektionsbereich beinhaltet und wobei eine Brechkraft in dem ersten Reflexionsbereich (410-1) mit gekrümmter Oberfläche von einer Brechkraft in dem zweiten Reflexionsbereich (410-2) mit gekrümmter Oberfläche verschieden ist,
und dadurch, dass die "Ghost"-Eliminierungsbaugruppe (500) mindestens eine erste Halbwellenplatte (550), eine erste Filmschicht (560-1) und eine zweite Filmschicht (560-2) umfasst, die erste Filmschicht (560-1) an dem ersten Projektionsbereich der optischen Baugruppe (400) angebracht ist und die zweite Filmschicht (560-2) an dem zweiten Projektionsbereich der optischen Baugruppe (400) angebracht ist; und
sich die mindestens eine erste Halbwellenplatte (550) zwischen der PGU (300) und einem optischen Pfad des ersten Projektionsbereichs befindet und eine Polarisationsrichtung des Lichtstrahls für das Erstbereichsbild, die durch die mindestens eine erste Halbwellenplatte (550) angepasst wird, senkrecht zu einer Polarisationsrichtung des durch die PGU (300) projizierten Lichtstrahls für das Zweitbereichsbild ist, wobei eine Polarisationsrichtung der ersten Filmschicht (560-1) senkrecht zu einer Polarisationsrichtung des durch die PGU (300) projizierten Lichtstrahls für das Erstbereichsbild ist und die Polarisationsrichtung der ersten Filmschicht (560-1) senkrecht zu einer Polarisationsrichtung der zweiten Filmschicht ist; oder
sich die mindestens eine erste Halbwellenplatte (550) zwischen der PGU (300) und einem optischen Pfad des zweiten Projektionsbereichs befindet und eine Polarisationsrichtung des Lichtstrahls für das Zweitbereichsbild, die durch die mindestens eine Halbwellenplatte (550) angepasst wird, senkrecht zu einer Polarisationsrichtung des durch die PGU (300) projizierten Lichtstrahls für das Erstbereichsbild ist, wobei eine Polarisationsrichtung der ersten Filmschicht (560-1) gleich einer Polarisationsrichtung des durch die PGU (300) projizierten Lichtstrahls für das Erstbereichsbild ist und die Polarisationsrichtung der ersten Filmschicht (560-1) senkrecht zu einer Polarisationsrichtung der zweiten Filmschicht ist.

2. Einrichtung nach Anspruch 1, wobei die PGU (300) eine optische Projektor-Engine (310) und einen Diffusor (320) umfasst und die optische Projektor-Engine (310) dazu ausgelegt ist, den in das Bild zu projizierenden Lichtstrahl zu erzeugen;
der Diffusor (320) einen dritten Projektionsbereich und einen vierten Projektionsbereich umfasst; und
der Diffusor (320) zu Folgendem ausgelegt ist: gleichmäßiges Projizieren, auf den ersten Projektionsbereich der optischen Baugruppe (400), des Lichtstrahls, der für das Erstbereichsbild bestimmt ist und der in dem dritten Projektionsbereich empfangen wird; und gleichmäßiges Projizieren, auf den zweiten Projektionsbereich der optischen Baugruppe (400), des Lichtstrahls, der für das Zweitbereichsbild bestimmt ist und der in dem vierten Projektionsbereich empfangen wird.

3. Einrichtung nach Anspruch 2, wobei die "Ghost"-Eliminierungsbaugruppe (500) mindestens eine zweite Halbwellenplatte, eine dritte Filmschicht und eine vierte Filmschicht umfasst, die dritte Filmschicht an dem ersten Projektionsbereich der optischen Baugruppe (400) angebracht ist und die vierte Filmschicht an dem zweiten Projektionsbereich der optischen Baugruppe (400) angebracht ist; und
sich die mindestens eine zweite Halbwellenplatte zwischen der optischen Projektor-Engine (310) und einem optischen Pfad des dritten Projektionsbereichs befindet und eine Polarisationsrichtung des Lichtstrahls für das Erstbereichsbild, die durch die mindestens eine zweite Halbwellenplatte angepasst wird, senkrecht zu einer Polarisationsrichtung des durch die optische Projektor-Engine (310) projizierten Lichtstrahls für das Zweitbereichsbild ist, wobei eine Polarisationsrichtung der ersten Filmschicht senkrecht zu einer Polarisationsrichtung des durch die optischen Projektor-Engine (310) projizierten Lichtstrahls für das Erstbereichsbild ist und die Polarisationsrichtung der ersten Filmschicht senkrecht zu einer Polarisationsrichtung der zweiten Filmschicht ist; oder
sich die mindestens eine zweite Halbwellenplatte zwischen der optischen Projektor-Engine (310) und einem optischen Pfad des ersten Projektionsbereichs befindet und eine Polarisationsrichtung des Lichtstrahls für das Zweitbereichsbild, die durch die mindestens eine zweite Halbwellenplatte angepasst wird, senkrecht zu einer Polarisationsrichtung des durch die optische Projektor-Engine (310) projizierten Lichtstrahls für das Erstbereichsbild ist, wobei eine Polarisationsrichtung der ersten Filmschicht gleich einer Polarisationsrichtung des durch die optischen Projektor-Engine (310) projizierten Lichtstrahls für das Erstbereichsbild ist und die Polarisationsrichtung der ersten Filmschicht senkrecht zu einer Polarisationsrichtung der zweiten Filmschicht ist.

4. Einrichtung nach einem der Ansprüche 1 bis 3, wobei die Head-up-Display-Einrichtung ferner einen ersten Reflektor (313) umfasst, wobei
der erste Reflektor (313) zu Folgendem ausgelegt ist: Durchführen einer optischen Pfadfaltung an dem durch die PGU (300) projizierten Lichtstrahl für das Erstbereichsbild, sodass der Lichtstrahl für das Erstbereichsbild zu dem ersten Projektionsbereich des Freiform-Primärspiegels (410) reflektiert wird; und Durchführen einer optischen Pfadfaltung an dem durch die PGU (300) projizierten Lichtstrahl für das Zweitbereichsbild, sodass der Lichtstrahl für das Zweitbereichsbild zu dem zweiten Projektionsbereich des Freiform-Primärspiegels (410) reflektiert wird.

5. Fahrzeug, das die Head-up-Display-Einrichtung nach einem der Ansprüche 1 bis 4 umfasst.

6. Head-up-Display-Verfahren, wobei das Head-up-Display-Verfahren in einer Head-up-Display-Einrichtung implementiert wird und die Head-up-Display-Einrichtung eine Bilderzeugungseinheit, PGU, und eine optische Baugruppe umfasst; und das Head-up-Display-Verfahren Folgendes umfasst:
Emittieren (2601), unter Verwendung der PGU, eines in ein Bild zu projizierenden Lichtstrahls, wobei das Bild, in das projiziert werden soll, ein Erstbereichsbild und ein Zweitbereichsbild umfasst, sodass ein Lichtstrahl für das Erstbereichsbild durch einen ersten Projektionsbereich der optischen Baugruppe hindurchgeht und ein Lichtstrahl für das Zweitbereichsbild durch einen zweiten Projektionsbereich der optischen Baugruppe hindurchgeht, wobei
eine Brechkraft eines Teils der optischen Baugruppe, durch den ein optischer Pfad des Lichtstrahls für das Erstbereichsbild hindurchgeht, von einer Brechkraft eines Teils der optischen Baugruppe, durch den ein optischer Pfad des Lichtstrahls für das Zweitbereichsbild hindurchgeht, verschieden ist, sodass ein virtuelles Bild, das dem Erstbereichsbild entspricht, und ein virtuelles Bild, das dem Zweitbereichsbild entspricht, auf unterschiedliche Positionen außerhalb einer Windschutzscheibe fokussiert werden,
wobei die optische Baugruppe einen Freiform-Primärspiegel umfasst, wobei der Freiform-Primärspiegel einen ersten Reflexionsbereich mit gekrümmter Oberfläche als den ersten Projektionsbereich und einen zweiten Reflexionsbereich mit gekrümmter Oberfläche als den zweiten Projektionsbereich beinhaltet und wobei eine Brechkraft in dem ersten Reflexionsbereich mit gekrümmter Oberfläche von einer Brechkraft in dem zweiten Reflexionsbereich mit gekrümmter Oberfläche verschieden ist,
wobei die Head-up-Display-Einrichtung ferner eine "Ghost"-Eliminierungsbaugruppe umfasst; und das Verfahren ferner Folgendes umfasst:
Anpassen, unter Verwendung der "Ghost"-Eliminierungsbaugruppe, des Lichtstrahls für das Erstbereichsbild und/oder des Lichtstrahls für das Zweitbereichsbild, der bzw. die in die "Ghost"-Eliminierungsbaugruppe eingegeben werden/wird, sodass der Lichtstrahl, der für das Erstbereichsbild bestimmt ist und der durch den ersten Projektionsbereich der optischen Baugruppe emittiert wird, den Lichtstrahl, der für das Zweitbereichsbild bestimmt ist und der durch den zweiten Projektionsbereich der optischen Baugruppe emittiert wird, nicht überlappt, und
wobei die "Ghost"-Eliminierungsbaugruppe mindestens eine erste Halbwellenplatte, eine erste Filmschicht und eine zweite Filmschicht umfasst, die erste Filmschicht an dem ersten Projektionsbereich der optischen Baugruppe angebracht ist und die zweite Filmschicht an dem zweiten Projektionsbereich der optischen Baugruppe angebracht ist; und
das Anpassen, unter Verwendung der "Ghost"-Eliminierungsbaugruppe, des Lichtstrahls für das Erstbereichsbild und/oder des Lichtstrahls für das Zweitbereichsbild, das bzw. die in die "Ghost"-Eliminierungsbaugruppe eingegeben werden/wird, Folgendes umfasst:
die mindestens eine erste Halbwellenplatte befindet sich zwischen der PGU und einem optischen Pfad des ersten Projektionsbereichs, Anpassen, unter Verwendung der mindestens einen Halbwellenplatte, einer Polarisationsrichtung des Lichtstrahls für das durch die PGU projizierte Erstbereichsbild, sodass sie senkrecht zu einer Polarisationsrichtung des Lichtstrahls für das durch die PGU projizierte Zweitbereichsbild ist, wobei eine Polarisationsrichtung der ersten Filmschicht senkrecht zu einer Polarisationsrichtung des durch die PGU projizierten Lichtstrahls für das Erstbereichsbild ist und die Polarisationsrichtung der ersten Filmschicht senkrecht zu einer Polarisationsrichtung der zweiten Filmschicht ist; oder
die mindestens eine erste Halbwellenplatte befindet sich zwischen der PGU und einem optischen Pfad des ersten Projektionsbereichs, Anpassen, unter Verwendung der mindestens einen Halbwellenplatte, einer Polarisationsrichtung des Lichtstrahls für das Zweitbereichsbild, sodass sie senkrecht zu einer Polarisationsrichtung des Lichtstrahls für das durch die PGU projizierte Erstbereichsbild ist, wobei eine Polarisationsrichtung der ersten Filmschicht gleich einer Polarisationsrichtung des durch die PGU projizierten Lichtstrahls für das Erstbereichsbild ist und die Polarisationsrichtung der ersten Filmschicht senkrecht zu einer Polarisationsrichtung der zweiten Filmschicht ist.

## Revendications

1. Appareil d'affichage tête haute, comprenant une unité de génération d'image, PGU (300), et un ensemble optique (400), dans lequel
la PGU (300) est configurée pour : générer un faisceau lumineux à projeter dans une image, l'image dans laquelle à projeter comprenant une première image de zone et une deuxième image de zone ; émettre un faisceau lumineux pour la première image de zone, de sorte que le faisceau lumineux pour la première image de zone passe à travers une première zone de projection de l'ensemble optique (400) ; et émettre un faisceau lumineux pour la deuxième image de zone, de sorte que le faisceau lumineux pour la deuxième image de zone passe à travers une deuxième zone de projection de l'ensemble optique (400) ; et
une puissance focale d'une partie de l'ensemble optique (400) traversée par un chemin optique du faisceau lumineux pour la première image de zone est différente d'une puissance focale d'une partie de l'ensemble optique (400) traversée par un chemin optique du faisceau lumineux pour la deuxième image de zone,
dans lequel l'appareil comprend en outre un ensemble d'élimination d'images parasites (500) et l'ensemble d'élimination d'images parasites (500) est configuré pour ajuster le faisceau lumineux pour la première image de zone et/ou le faisceau lumineux pour la deuxième image de zone qui est/sont entré(s) dans l'ensemble d'élimination d'images parasites (500), de sorte que le faisceau lumineux pour la première image de zone et qui est émis à travers la première zone de projection de l'ensemble optique (400) ne chevauche pas le faisceau lumineux pour la deuxième image de zone et qui est émis à travers la deuxième zone de projection de l'ensemble optique (400),
**caractérisé en ce que**
l'ensemble optique (400) comprend un miroir primaire de forme libre (410), le miroir primaire de forme libre (410) comportant une première zone de réflexion à surface courbe (410-1) en tant que première zone de projection et une deuxième zone de réflexion à surface courbe (410-2) en tant que deuxième zone de projection, et une puissance focale dans la première zone de réflexion à surface courbe (410-1) étant différente d'une puissance focale dans la deuxième zone de réflexion à surface courbe (410-2),
et **en ce que** l'ensemble d'élimination d'images parasites (500) comprend au moins une première lame demi-onde (550), une première couche de film (560-1) et une deuxième couche de film (560-2), la première couche de film (560-1) est fixée à la première zone de projection de l'ensemble optique (400), et la deuxième couche de film (560-2) est fixée à la deuxième zone de projection de l'ensemble optique (400) ; et
l'au moins une première lame demi-onde (550) est située entre la PGU (300) et un chemin optique de la première zone de projection, et une direction de polarisation du faisceau lumineux pour la première image de zone ajustée par l'au moins une première lame demi-onde (550) est perpendiculaire à une direction de polarisation du faisceau lumineux pour la deuxième image de zone projetée par la PGU (300), une direction de polarisation de la première couche de film (560-1) étant perpendiculaire à une direction de polarisation du faisceau lumineux pour la première image de zone projetée par la PGU (300), et la direction de polarisation de la première couche de film (560-1) étant perpendiculaire à une direction de polarisation de la deuxième couche de film ; ou
l'au moins une première lame demi-onde (550) est située entre la PGU (300) et un chemin optique de la deuxième zone de projection, et une direction de polarisation du faisceau lumineux pour la deuxième image de zone ajustée par l'au moins une lame demi-onde (550) est perpendiculaire à une direction de polarisation du faisceau lumineux pour la première image de zone projetée par la PGU (300), une direction de polarisation de la première couche de film (560-1) étant identique à la direction de polarisation du faisceau lumineux pour la première image de zone projetée par la PGU (300), et la direction de polarisation de la première couche de film (560-1) étant perpendiculaire à une direction de polarisation de la deuxième couche de film.

2. Appareil selon la revendication 1, dans lequel la PGU (300) comprend un moteur optique projecteur (310) et un diffuseur (320), et le moteur optique projecteur (310) est configuré pour générer le faisceau lumineux à projeter dans l'image ;
le diffuseur (320) comprend une troisième zone de projection et une quatrième zone de projection ; et
le diffuseur (320) est configuré pour : projeter uniformément, sur la première zone de projection de l'ensemble optique (400), le faisceau lumineux qui est destiné à la première image de zone et qui est reçu dans la troisième zone de projection ; et projeter uniformément, sur la deuxième zone de projection de l'ensemble optique (400), le faisceau lumineux qui est destiné à la deuxième image de zone et qui est reçu dans la quatrième zone de projection.

3. Appareil selon la revendication 2, dans lequel l'ensemble d'élimination d'images parasites (500) comprend au moins une deuxième lame demi-onde, une troisième couche de film et une quatrième couche de film, la troisième couche de film est fixée à la première zone de projection de l'ensemble optique (400), et la quatrième couche de film est fixée à la deuxième zone de projection de l'ensemble optique (400) ; et
l'au moins une deuxième lame demi-onde est située entre le moteur optique projecteur (310) et un chemin optique de la troisième zone de projection, et une direction de polarisation du faisceau lumineux pour la première image de zone ajustée par l'au moins une deuxième lame demi-onde est perpendiculaire à une direction de polarisation du faisceau lumineux pour la deuxième image de zone projetée par le moteur optique projecteur (310), une direction de polarisation de la première couche de film étant perpendiculaire à une direction de polarisation du faisceau lumineux pour la première image de zone projetée par le moteur optique projecteur (310), et la direction de polarisation de la première couche de film étant perpendiculaire à une direction de polarisation de la deuxième couche de film ; ou
l'au moins une deuxième lame demi-onde est située entre le moteur optique projecteur (310) et un chemin optique de la première zone de projection, et une direction de polarisation du faisceau lumineux pour la deuxième image de zone ajustée par l'au moins une deuxième lame demi-onde est perpendiculaire à une direction de polarisation du faisceau lumineux pour la première image de zone projetée par le moteur optique projecteur (310), une direction de polarisation de la première couche de film étant identique à la direction de polarisation du faisceau lumineux pour la première image de zone projetée par le moteur optique projecteur (310), et la direction de polarisation de la première couche de film étant perpendiculaire à une direction de polarisation de la deuxième couche de film.

4. Appareil selon l'une quelconque des revendications 1 à 3, dans lequel l'appareil d'affichage tête haute comprend en outre un premier réflecteur (313), dans lequel
le premier réflecteur (313) est configuré pour : réaliser un repliement de chemin optique sur le faisceau lumineux pour la première image de zone projetée par la PGU (300), de sorte que le faisceau lumineux pour la première image de zone est réfléchi vers la première zone de projection du miroir primaire de forme libre (410); et réaliser un repliement de chemin optique sur le faisceau lumineux pour la deuxième image de zone projetée par la PGU (300), de sorte que le faisceau lumineux pour la deuxième image de zone est réfléchi vers la deuxième zone de projection du miroir primaire de forme libre (410).

5. Véhicule, comprenant l'appareil d'affichage tête haute selon l'une quelconque des revendications 1 à 4.

6. Procédé d'affichage tête haute, dans lequel le procédé d'affichage tête haute est mis en œuvre dans un appareil d'affichage tête haute, et l'appareil d'affichage tête haute comprend une unité de génération d'image, PGU, et un ensemble optique ; et le procédé d'affichage tête haute comprend :
l'émission (2601), en utilisant la PGU, d'un faisceau lumineux à projeter dans une image, l'image dans laquelle projeter comprenant une première image de zone et une deuxième image de zone, de sorte qu'un faisceau lumineux pour la première image de zone traverse une première zone de projection de l'ensemble optique, et un faisceau lumineux pour la deuxième image de zone traverse une deuxième zone de projection de l'ensemble optique, dans lequel
une puissance focale d'une partie de l'ensemble optique traversée par un chemin optique du faisceau lumineux pour la première image de zone est différente d'une puissance focale d'une partie de l'ensemble optique traversée par un chemin optique du faisceau lumineux pour la deuxième image de zone, de sorte qu'une image virtuelle correspondant à la première image de zone et une image virtuelle correspondant à la deuxième image de zone sont focalisées sur différentes positions à l'extérieur d'un pare-brise,
dans lequel l'ensemble optique comprend un miroir primaire de forme libre, le miroir primaire de forme libre comporte une première zone de réflexion à surface courbe en tant que première zone de projection et une deuxième zone de réflexion à surface courbe en tant que deuxième zone de projection, et une puissance focale dans la première zone de réflexion à surface courbe étant différente d'une puissance focale dans la deuxième zone de réflexion à surface courbe,
dans lequel l'appareil d'affichage tête haute comprend en outre un ensemble d'élimination d'images parasites ; et le procédé comprend en outre :
l'ajustement, en utilisant l'ensemble d'élimination d'images parasites, du faisceau lumineux pour la première image de zone et/ou du faisceau lumineux pour la deuxième image de zone qui est/sont entré(s) dans l'ensemble d'élimination d'images parasites, de sorte que le faisceau lumineux pour la première image de zone et qui est émis à travers la première zone de projection de l'ensemble optique ne chevauche pas le faisceau lumineux pour la deuxième image de zone et qui est émis à travers la deuxième zone de projection de l'ensemble optique, et
dans lequel l'ensemble d'élimination d'images parasites comprend au moins une première lame demi-onde, une première couche de film et une deuxième couche de film, la première couche de film est fixée à la première zone de projection de l'ensemble optique, et la deuxième couche de film est fixée à la deuxième zone de projection de l'ensemble optique ; et
l'ajustement, en utilisant l'ensemble d'élimination d'images parasites, du faisceau lumineux pour la première image de zone et/ou du faisceau lumineux pour la deuxième image de zone qui est/sont entré(s) dans l'ensemble d'élimination d'images parasites comprend :
l'au moins une première lame demi-onde est située entre la PGU et un chemin optique de la première zone de projection, l'ajustement, en utilisant l'au moins une lame demi-onde, d'une direction de polarisation du faisceau lumineux pour la première image de zone projetée par la PGU afin qu'elle soit perpendiculaire à une direction de polarisation du faisceau lumineux pour la deuxième image de zone projetée par la PGU, une direction de polarisation de la première couche de film étant perpendiculaire à la direction de polarisation du faisceau lumineux pour la première image de zone projetée par la PGU, et la direction de polarisation de la première couche de film étant perpendiculaire à une direction de polarisation de la deuxième couche de film ; ou
l'au moins une première lame demi-onde est située entre la PGU et un chemin optique de la première zone de projection, l'ajustement, en utilisant l'au moins une lame demi-onde, d'une direction de polarisation du faisceau lumineux pour que la deuxième image de zone soit perpendiculaire à une direction de polarisation du faisceau lumineux pour la première image de zone projetée par la PGU, une direction de polarisation de la première couche de film étant la même que la direction de polarisation du faisceau lumineux pour la première image de zone projetée par la PGU, et la direction de polarisation de la première couche de film étant perpendiculaire à une direction de polarisation de la deuxième couche de film.
